(19) Europäisches Patentamt
European Patent Office
Office européen des brevets

(11) EP 2 586 804 B1

(12) **EUROPEAN PATENT SPECIFICATION**

(45) Date of publication and mention of the grant of the patent:
**02.04.2014 Bulletin 2014/14**

(51) Int Cl.:
***C08F 299/00*** *(2006.01)*

(21) Application number: **13152409.2**

(22) Date of filing: **27.12.2006**

(54) **Photoradically and thermally radically curable composition**

Photoradikal und Wärmeradikal härtbare Zusammensetzung

Composition durcissable par voie photoradicalaire et par voie radicalaire thermique

(84) Designated Contracting States:
**AT BE BG CH CY CZ DE DK EE ES FI FR GB GR HU IE IS IT LI LT LU LV MC NL PL PT RO SE SI SK TR**

(30) Priority: **28.12.2005 JP 2005380404**

(43) Date of publication of application:
**01.05.2013 Bulletin 2013/18**

(62) Document number(s) of the earlier application(s) in accordance with Art. 76 EPC:
**06843539.5 / 1 967 533**

(73) Proprietor: **KANEKA CORPORATION**
**Osaka (JP)**

(72) Inventors:
- **Tamai, Hitoshi**
  **OSAKA 566-0072 (JP)**
- **Ogawa, Kohei**
  **OSAKA 566-0072 (JP)**
- **Nakagawa, Yoshiki**
  **OSAKA 566-0072 (JP)**

(74) Representative: **Hart-Davis, Jason et al**
**Cabinet Beau de Loménie**
**158, rue de l'Université**
**75340 Paris Cedex 07 (FR)**

(56) References cited:
**WO-A1-2005/000927 JP-A- 2004 123 775**

EP 2 586 804 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### TECHNICAL FIELD

The present invention relates to a curable composition for both photoradical curing and thermal radical curing. In particular, the present invention relates to a curable composition for both photoradical curing and thermal radical curing, which contains a vinyl-based polymer having a (meth)acryloyl-based group at a molecular terminal , a photoradical initiator and a thermal radical initiator as essential components.

### BACKGROUND ART

An acrylic rubber is used as a functional part, a safety related part, or the like, mainly including peripheral parts of automobile engines, because of its features such as heat resistance and oil resistance. However, when the acrylic rubber is cured, poor workability such as adhesion to a roll upon kneading of additives, e.g., fillers and vulcanizing agents, poor smoothness upon sheeting, or non-flowability upon molding; and poor curability such as low vulcanization rate or long post curing time are the problems. There are also problems such as lack of reliability in the case of using as a seal, and necessity of precision working of a flange surface.

An acrylic rubber having improved workability and curability is also reported (Patent Document 1), but is not a thermocurable acrylic rubber which enables quick curability and improved productivity.

In order to solve the problems mentioned above, polymers, which contain an acrylic polymer obtained by living radical polymerization as a main chain and have a (meth)acryloyl group at the terminal, are proposed (Patent Documents 2 and 3).

As a curing form which imparts quick curability, a photocuring-type composition using the acrylic polymer is proposed (Patent Document 4). However, some portion may not be irradiated with light, depending on the shape of a mold to be used, resulting in insufficient curability. As an alternative method for imparting quick curability, a thermal radical curing-type composition using the same acrylic polymer is proposed (Patent Document 5). However, a curing time of 10 to 20 minutes is required at a high temperature of 150°C to 180°C, and thus there is a problem that manufacturing facility cost and running cost increase.

As a method for solving the problems against quick curability, technologies relating to a system for both photoradical curing and thermal radical curing are reported (Patent Documents 6, 7, and 8). However, the invention in Patent Documents described above is an invention relating to the production of a block polymer, or a reactive component having an unsaturated group is not a (meth)acrylic polymer having a (meth)acryloyl group, and there is no description about the production of a rubbery substance having excellent oil resistance, heat resistance and weatherability.

Patent Document 1: Japanese Unexamined Patent Publication No. 2000-154370
Patent Document 2: Japanese Unexamined Patent Publication No. 2000-72816
Patent Document 3: Japanese Unexamined Patent Publication No. 2000-95826
Patent Document 4: Japanese Unexamined Patent Publication No. 2000-072816
Patent Document 5: Japanese Unexamined Patent Publication No. 2000-095826
Patent Document 6: Japanese Unexamined Patent Publication No. 10-53634
Patent Document 7: Japanese Unexamined Patent Publication No. 10-195121
Patent Document 8: Japanese Unexamined Patent Publication No. 2004-123775

### DISCLOSURE OF THE INVENTION

### PROBLEMS TO BE SOLVED BY THE INVENTION

An objective of the present invention is to provide a curable composition having excellent curability, which is capable of forming a cured article having excellent heat resistance, weatherability and oil resistance.

### MEANS FOR SOLVING THE PROBLEMS

Under these circumstances, the present inventors have intensively studied and found that the above objective can be achieved by producing a curable composition for both photoradical curing and thermal radical curing using a vinyl-based polymer having an alkenyl-based group, and thus the present invention has been completed.

That is, the present invention is directed to a curable article as defined in claim 1 obtained from a curable composition by both photoradical curing and thermal radical curing (the said curable composition hereinafter may be also simply referred to as a "curable composition"). The curable composition comprises as essential components:

(A) a vinyl-based polymer having two or more groups represented by the general formula (1):

$$-OC(O)C(R^a)=CH_2 \qquad (1)$$

wherein $R^a$ represents a hydrogen atom or an organic group having 1 to 20 carbon atoms, per molecule, and having one or more groups represented by the above general formula (1) at a molecular terminal ;

(B) a photoradical initiator; and
(C) a thermal radical initiator,

wherein the amount of component (B) is 0.001 to 10 parts and the amount of (C) is 0.01 to 3 parts, each based on 100 parts by weight of the component (A).

The molecular weight distribution of the component (A) is less than 1.8.

The component (A) is preferably a (meth)acrylic polymer.

The main chain of the component (A) is preferably produced by controlled radical polymerization, and the controlled radical polymerization is preferably living radical polymerization, and more preferably, atom transfer radical polymerization.

In the atom transfer radical polymerization, a metal complex selected from transition metal complexes having Group 7, Group 8, Group 9, Group 10 and Group 11 elements of the Periodic Table as central metal is preferably used as a catalyst. A complex selected from the group consisting of complexes of copper, nickel, ruthenium and iron is more preferred, and a complex of copper is still more preferred.

The component (B) is preferably an acylphosphine oxide and/or a phenylketone-based compound.

The component (C) is preferably an azo-based initiator and/or a peroxide-based initiator.

The curable composition can further contain (D) a redox-based initiator.

The cured article of the present invention is obtained by curing the curable composition.

## EFFECTS OF THE INVENTION

The cured article of the present invention obtained from the curable composition by both photoradical curing and thermal radical curing is excellent in curability, heat resistance, weatherability, oil resistance, and the like, and is also excellent in strength characteristics.

## BEST MODE FOR CARRYING OUT THE INVENTION

The curable composition to be used for both photoradical curing and thermal radical curing in the present invention will be described below.

The curable composition to be used in the present invention is a curable composition for both photoradical curing and thermal radical curing, including:

(A) a vinyl-based polymer having a molecular weight distribution of less than 1.8 and having two or more groups represented by the general formula (1):

$$-OC(O)C(R^a)=CH_2 \qquad (1)$$

wherein $R^a$ represents a hydrogen atom or an organic group having 1 to 20 carbon atoms, per molecule, and having one or more groups represented by the above general formula (1) at a molecular terminal ;

(B) a photoradical initiator; and
(C) a thermal radical initiator, as essential components, as defined in claim 1.

The respective components contained in the curable composition to be used in the present invention will be described in detail below.

### <Component (A)>

The component (A) is a vinyl-based polymer having two or more groups represented by the general formula (1) :

$-OC(O)C(R^a)=CH_2$ (1)

wherein $R^a$ represents a hydrogen atom or an organic group having 1 to 20 carbon atoms (hereinafter may also be simply referred to as a "(meth)acryloyl-based group"), per molecule, and having one or more groups represented by the above general formula (1) at either or both of the molecular termini. A vinyl-based polymer having two (meth)acryloyl-based groups per molecule at the molecular termini is preferred. In the case of producing the component (A), since the side reaction may actually occur, an average of the number of (meth)acryloyl-based groups in a mixture of the vinyl-based polymer thus produced may be less than 2. In the present invention, when the average of the number of (meth)acryloyl-based groups in a mixture of the vinyl-based polymer produced actually is 1.1 or more, this mixture is referred to as a component (A). In other words, the component (A) includes a mixture of a vinyl-based polymer, which contains a vinyl-based polymer having two or more (meth)acryloyl-based groups per molecule, and having one or more (meth)acryloyl-based groups at a molecular terminal.

In terms of performing crosslinking, the average of the number of the (meth)acryloyl-based groups is preferably 1.5 or more per molecule. Furthermore, while one or more (meth)acryloyl-based groups exist at a molecular terminal, there is no limitation on the position of the other (meth)acryloyl-based group. Since a distance between crosslinking points can lengthen, an aspect in which the other (meth)acryloyl-based group exists in the vicinity of the other molecular terminal is preferred, and an aspect in which the other (meth)acryloyl-based group exists at the other molecular terminal is particularly preferred.

$R^a$ in the (meth)acryloyl-based group represents a hydrogen atom or an organic group having 1 to 20 carbon atoms, and is preferably a hydrogen atom or a hydrocarbon group having 1 to 20 carbon atoms. Examples of the hydrocarbon group having 1 to 20 carbon atoms include an alkyl group having 1 to 20 carbon atoms, an aryl group having 6 to 20 carbon atoms, an aralkyl group having 7 to 20 carbon atoms, a nitrile group, and the like, and these groups may have a substituent such as a hydroxyl group. Examples of the alkyl group having 1 to 20 carbon atoms include, for example, a methyl group, an ethyl group, a propyl group, a butyl group, a pentyl group, a hexyl group, an octyl group, and a decyl group. Examples of the aryl group having 6 to 20 carbon atoms include, for example, a phenyl group and a naphthyl group. Examples of the aralkyl group having 7 to 20 carbon atoms include, for example, a benzyl group and a phenylether group. Specific examples of $R^a$ include, for example, -H, $-CH_3$, $-CH_2CH_3$, - $(CH_2)_nCH_3$ (n represents an integer of 2 to 19), $-C_6H_5$, $-CH_2OH$, and -CN. Of these groups, -H and $-CH_3$ are more preferred. The vinyl monomer constituting the main chain of the vinyl polymer (A) is not particularly limited but may be any of various monomers. Examples include (meth)acrylic monomers such as (meth)acrylic acid, methyl(meth)acrylate, ethyl(meth)acrylate, n-propyl(meth)acrylate, isopropyl(meth)acrylate, n-butyl(meth)acrylate, isobutyl(meth)acrylate, tert-butyl(meth)acrylate, n-pentyl(meth)acrylate, n-hexyl(meth)acrylate, cyclohexyl(meth)acrylate, n-heptyl(meth)acrylate, n-octyl(meth)acrylate, 2-ethylhexyl(meth)acrylate, nonyl(meth)acrylate, decyl(meth)acrylate, dodecyl(meth)acrylate, phenyl(meth)acrylate, toluyl(meth)acrylate, benzyl(meth)acrylate, 2-methoxyethyl(meth)acrylate, 3-methoxybutyl(meth)acrylate, 2-hydroxyethyl(meth)acrylate, 2-hydroxypropyl(meth)acrylate, stearyl(meth)acrylate, glycidyl(meth)acrylate, 2-aminoethyl(meth)acrylate, gamma-(methacryloyloxypropyl)trimethoxysilane, (meth)acrylic acid-ethylene oxide adducts, trifluoromethylmethyl(meth)acrylate, 2-trifluoromethylethyl(meth)acrylate, 2-perfluoroethylethyl(meth)acrylate, 2-perfluoroethyl-2-perfluorobutylethyl(meth)acrylate, 2-perfluoroethyl(meth)acrylate, perfluoromethyl(meth)acrylate, diperfluoromethylmethyl(meth)acrylate, 2-perfluoromethyl-2-perfluoroethylethyl(meth)acrylate, 2-perfluorohexylethyl(meth)acrylate, 2-perfluorodecylethyl(meth)acrylate and 2-perfluorohexadecylethyl(meth)acrylate; styrenic monomers such as styrene, vinyltoluene, alpha-methylstyrene, chlorostyrene, and styrenesulfonic acid and salts thereof; fluorine-containing vinyl monomers such as perfluoroethylene, perfluoropropylene and vinylidene fluoride; silicon-containing vinyl monomers such as vinyltrimethoxysilane and vinyltriethoxysilane; maleic anhydride, maleic acid and monoalkyl esters and dialkyl esters of maleic acid; fumaric acid and monoalkyl esters and dialkyl esters of fumaric acid; maleimide monomers such as maleimide, methylmaleimide, ethylmaleimide, propylmaleimide, butylmaleimide, hexylmaleimide, octylmaleimide, dodecylmaleimide, stearylmaleimide, phenylmaleimide and cyclohexylmaleimide; nitrile-containing vinyl monomers such as acrylonitrile and methacrylonitrile; amido-containing vinyl monomers such as acrylamide and methacrylamide; vinyl esters such as vinyl acetate, vinyl propionate, vinyl pivalate, vinyl benzoate and vinyl cinnamate; alkenes such as ethylene and propylene; conjugated dienes such as butadiene and isoprene; vinyl chloride, vinylidene chloride, allyl chloride, allyl alcohol and so forth. These may be used singly or a plurality of them may be copolymerized. Preferred among them from the viewpoint of physical properties of products, among others, are styrenic monomers and (meth)acrylic monomers, more preferably acrylic ester monomers and (meth)acrylic ester monomers, still more preferably, butyl acrylate, ethyl acrylate, and 2-methoxyethylacrylate. In the viewpoint of oil resistance of a product, at least two selected from the group consisting of butyl acrylate, ethyl acrylate, and 2-methoxyethylacrylate are preferably contained in the main chain. In the practice of the invention, these preferred monomers may be copolymerized with other monomers, and, on that occasion, the proportion of these preferred monomers is preferably 40% or

more by weight. In the nomenclature used above, (meth)acrylic acid, for instance, means acrylic acid and/or methacrylic acid. The molecular weight distribution of the vinyl polymer (A) is not particularly limited but the ratio of weight average molecular weight ($M_w$) to number average molecular weight ($M_n$) as determined by gel permeation chromatography is generally less than 1.8, preferably not more than 1.7, more preferably not more than 1.6, still more preferably not more than 1.5, especially preferably not more than 1.4, most preferably not more than 1.3. In GPC measurements in the practice of the invention, the measurements are generally carried out using polystyrene gel columns with chloroform or tetrahydrofuran as the mobile phase. The molecular weight and so on can be determined on a polystyrene equivalent basis. The molecular weight distribution with less than 1.8 is advantageous because of low viscosity and excellent workability of the composition. The number average molecular weight of the vinyl polymer (A) is not particularly limited but the lower limit is preferably 500, and more preferably 3000, the upper limit is preferably 100,000, more preferably 40,000. Less than 500 of molecular weight leads to poor properties of vinyl-based polymer and more than 100,000 of molecular weight leads to difficulty in handling.

<Methods for Synthesis of the Main Chain>

The method of synthesizing the vinyl polymer (A) is not limited. In general, vinyl polymer is produced by an anion polymerization or radical polymerization, but is preferably produced by a controlled radical polymerization technique, for the availability of monomers and easiness of control. More preferably, among radical polymerization, a living radical polymerization technique, or a radical polymerization with the use of chain transfer agent can be used. Particularly preferably, a living radical polymerization is used.
The radical polymerization method can be divided into the "general radical polymerization method" in which a monomer having a given functional group is simply copolymerized with a vinyl monomer using an azo or peroxide compound as the polymerization initiator and the "controlled radical polymerization method" which is capable of introducing a given functional group into a defined position such as the molecular chain terminus.
The "general radical polymerization method" is an expedient method. However, by this method, a monomer having a given functional group is introduced into the product polymer only in probabilities, and in order to synthesize a polymer of high functionality, this monomer must be used in a fairly large amount. When conversely the amount of the monomer is small, the ratio of polymer molecules not provided with the given functional group is increased. Another disadvantage is that since the reaction is a free radical polymerization reaction, the molecular weight distribution is so broadened that only a polymer having a high viscosity can be obtained.
The "controlled radical polymerization method" can be divided into the "chain transfer agent technique" in which a vinyl polymer having a functional group at the molecular chain terminus is produced by carrying out the polymerization reaction using a chain transfer agent having a given functional group, and the "living radical polymerization technique" in which the polymerization proceeds with the growing chain terminus constantly growing without being interrupted by a termination reaction to give a polymer approximating the designed molecular weight.
The "chain transfer agent technique" is capable of giving a polymer of high functionality but a chain transfer agent having a given functional group must be used in a fairly large amount relative to the initiator, with the consequent disadvantage in economics inclusive of the cost of treatment involved. A further disadvantage of the technique is that because it is also a free radical polymerization method as is said "general radical polymerization method", there can be obtained only a polymer having a broad molecular weight distribution and a high viscosity.

Unlike the above polymerization technology, the "living radical polymerization technique" is advantageous in that despite its also being a method for radical polymerization reaction which is generally considered to be hardly controllable because of the high velocity polymerization and high tendency of termination by radical-radical coupling or the like, a termination reaction does not easily take place, thus giving a polymer with a narrow molecular weight distribution (Mw/Mn=about 1.1 to 1.5), and further in that the molecular weight can be freely controlled by adjusting the monomer-initiator charge ratio. Since "living radical polymerization" is thus capable of giving a polymer having a narrow molecular weight distribution and a low viscosity and enables introduction of a monomer having a given functional group in an almost designated position, it is a further preferred method for producing a vinyl polymer having said given functional group.

In a narrow sense of the term, "living polymerization" means a polymerization in which the molecule grows with its growth termini being constantly activated. Generally, however, the term is used to broadly cover as well a pseudo-living polymerization reaction in which the polymer grows while molecules with an activated terminus and molecules with an inactivated terminus are in equilibrium, and the term as used in this specification also has the latter broad meaning.

Recently, "living radical polymerization" has been studied in earnest by many research groups. By way of illustration, this technology includes the method employing a cobalt porphyrin complex as described in J. Am. Chem. Soc., 116, 7943 (1994); the method using a radical rapping agent such as a nitroxide compound as described in Macromolecules, 27, 7228 (1994), and the atom transfer radical polymerization (ATRP) method using an organohalogen compound as the initiator and a transition metal complex as the catalyst. Among such variations of the "living radical

polymerization method", the "atom transfer radical polymerization" method in which a vinyl monomer is polymerized using an organohalogen compound or a sulfonyl halide compound as the initiator and a transition metal complex as the catalyst is still more preferred for the production of said vinyl polymer having a given functional group because, in addition to the above-mentioned advantages of "living radical polymerization", it is capable of giving a polymer having a halogen atom or the like at its terminus, which is comparatively favorable for a functional group exchange reaction, and offers a broad freedom in the initiator and catalyst design. Regarding this atom transfer radical polymerization method, reference can be made to Matyjaszewski et al.: J. Am. Chem. Soc., 117, 5614 (1995), Macromolecules, 28, 7901 (1995), Science, 272, 866 (1996), WO 96/30421, WO 97/18247, or Sawamoto et al.: Macromolecules, 28, 1721 (1995), among others.

The method of synthesizing the vinyl polymer (A) is not limited but is preferably a controlled radical polymerization technique, more preferably a living radical polymerization technique, particularly an atom transfer radical polymerization technique.

The polymerization reaction using a chain transfer agent, which is a variant of controlled radical polymerization, for the production of vinyl polymer (A) to be described hereinafter, is now explained. While the radical polymerization technique utilizing a chain transfer agent (telomer) is not particularly limited but for the production of a vinyl polymer having a terminal structure suited to the present invention, the following two alternative techniques, among others, can be mentioned. These include the process for producing a halogen-terminated polymer using a halogenated hydrocarbon as a chain transfer agent as described in Japanese Kokai Publication Hei-4-132706 and the process for producing a hydroxyl-terminated polymer using an OH-containing mercaptan, an OH-containing polysulfide or the like as the chain transfer agent as described in Japanese Kokai Publication Sho-61-271306, Japanese Patent 2594402, and Japanese Kokai Publication Sho-54-47782.

The living radical polymerization technique is now explained.

First, the technique which uses a radical capping agent such as a nitroxide compound is described. In this polymerization, a nitroxy free radical (=N-O· ), which is generally stable, is used as the radical capping agent. While such a compound is not limited, nitroxy free radicals derived from cyclic hydroxylamines, such as the 2,2,6,6-substituted-1-piperidinyloxy radical and 2,2,5,5-substituted-1-pyrrolidinyloxy radical, are preferred. Appropriate as the substituents are alkyl groups containing not more than 4 carbon atoms, such as methyl and ethyl groups. Specific nitroxy free radical compounds include, but are not limited to, 2,2,6,6-tetramethyl-1-piperidinyloxy radical (TEMPO), 2,2,6,6-tetraethyl-1-piperidinyloxy radical, 2,2,6,6-tetramethyl-4-oxo-1-piperidinyloxy radical, 2,2,5,5-tetramethyl-1-pyrrolidinyloxy radical, 1,1,3,3-tetramethyl-2-isoindolinyloxy radical and N,N-di-tert-butylaminoxy radical, among others. Such a stable free radical as the galvinoxyl free radical may be used in lieu of the nitroxy free radical.

The above radical capping agent is used in combination with a radical generator. It is presumable that the reaction product from a radical capping agent and a radical generator serves as a polymerization initiator and the polymerization of an addition-polymerizable monomer(s) proceeds. The mixing ratio of the two agents is not particularly limited but, appropriately, the radical initiator is used in an amount of 0.1 to 10 moles per mole of the radical capping agent.

Although various compounds can be used as the radical generator, a peroxide capable of generating a radical under polymerization temperature conditions is preferred. Such peroxide includes but is not limited to diacyl peroxides such as benzoyl peroxide and lauroyl peroxide, dialkyl peroxides such as dicumyl peroxide and di-tert-butyl peroxide, peroxydicarbonates such as diisopropyl peroxydicarbonate and bis(4-tert-butylcyclohexyl)peroxydicarbonate, alkyl peresters such as tert-butyl peroxyoctoate and tert-butyl peroxybenzoate, and the like. In particular, benzoyl peroxide is preferred. Further, another radical generator, for example a radical-generating azo compound such as azobisisobutyronitrile, may be used in lieu of the peroxide.

As reported in Macromolecules, 1995, 28, 2993, such alkoxyamine compounds as shown below may be used as the initiator instead of the combined use of a radical capping agent and a radical generator.

[Chemical Formula 1]

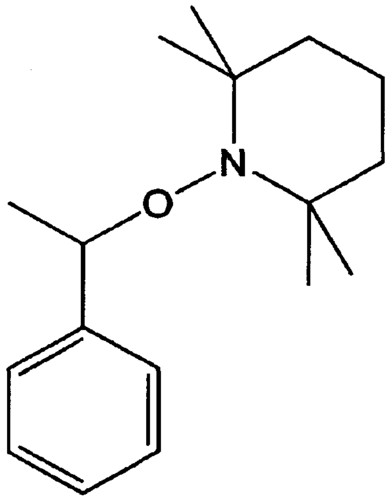

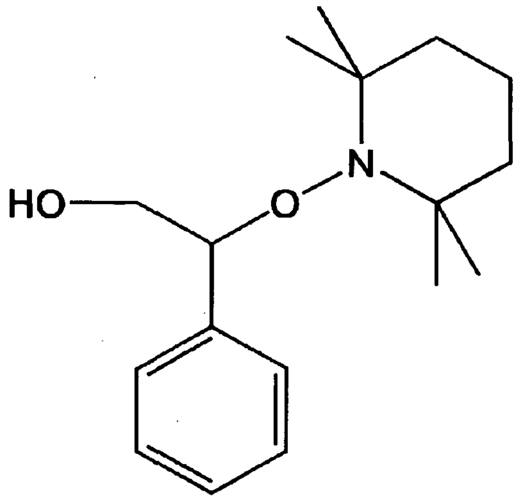

When an alkoxyamine compound is used as the initiator and the compound has a hydroxyl or like functional group, as indicated by either formula shown above, a functional group-terminated polymer is obtained. When this is applied to the method of the invention, a functional group-terminated vinyl polymer is obtained.

The monomer (s) to be used in the polymerization using a radical capping agent, such as a nitroxide compound as mentioned above and the polymerization conditions such as solvent and polymerization temperature are not restricted but may be the same as those used in atom transfer radical polymerization to be described below.

Then, the technique of atom transfer radical polymerization, which is more preferred as the technique of living radical polymerization, is described.

In this atom transfer radical polymerization, an organohalogen compound, in particular an organohalogen compound having a highly reactive carbon-halogen bond (e.g. a carbonyl compound having a halogen atom at the alpha position, or a compound having a halogen at the benzyl position), or a sulfonyl halide compound or the like is used as the initiator.

Specific examples are: $C_6H_5$-$CH_2X$, $C_6H_5$-C(H) (X) $CH_3$, $C_6H_5$-C (X) $(CH_3)_2$ (in the above formulas, $C_6H_5$ stands for a phenyl group; X is a chlorine, bromine or iodine atom), $R^3$-C (H) (X)-$CO_2R^4$, $R^3$-$C(CH_3)$ (X)-$CO_2R^4$, $R^3$-C(H) (X)-C(O)$R^4$, $R^3$-$C(CH_3)$(X)-C(O)$R^4$ (in the above formula, $R^3$ and $R^4$ each represents a hydrogen atom or an alkyl having 1 to 20 carbon atoms, aryl having 6 to 20 carbon atoms or aralkyl group containing 7 to 20 carbon atoms; X is a chlorine, bromine or iodine atom), $R^3$-$C_6H_4$-$SO_2X$ (in the above formula, $R^3$ is a hydrogen atom or an alkyl having 1 to 20 carbon atoms, aryl having 6 to 20 carbon atoms or aralkyl group containing 7 to 20 carbon atoms and X is a chlorine, bromine or iodine atom), and so on.

An organohalogen or sulfonyl halide compound having a functional group other than a functional group serving as an initiator of the polymerization may also be used as the initiator in atom transfer radical polymerization. In such cases, there is formed a vinyl polymer having said functional group at one terminus of the main chain with the other terminus having the growing terminal structure for atom transfer radical polymerization. As such functional group, an alkenyl group, a crosslinking silyl group, a hydroxyl group, an epoxy group, an amino group, an amido group and the like are exemplified.

The alkenyl-containing organohalogen compound includes but is not limited to compounds having a structure represented by the general formula (6): $R^6$ $R^7$C(X)-$R^8$-$R^9$-C($R^5$)=$CH_2$ (6) wherein $R^5$ is a hydrogen atom or a methyl group; $R^6$ and $R^7$ each represents a hydrogen atom or an alkyl having 1 to 20 carbon atoms, aryl having 6 to 20 carbon atoms or aralkyl group containing 7 to 20 carbon atoms or these are linked to each other at the respective free termini; $R^8$ is -C(O)O-(ester group), -C(O)-(keto group) or an o-, m- or p-phenylene group; $R^9$ is a direct bond or a bivalent organic group containing 1 to 20 carbon atoms, which may optionally contain one or more ether linkages; X is a chlorine, bromine or iodine atom. As specific examples of the substituents $R^6$ and $R^7$, there may be mentioned hydrogen, methyl, ethyl, n-propyl, isopropyl, butyl, pentyl, hexyl and the like. $R^6$ and $R^7$ may be linked to each other at the respective free termini to form a cyclic structure. As for specific examples of organic group containing 1 to 20 carbon atoms of $R^9$, an alkylene group having 1 to 20 carbon atoms, which may contain one or more ether bonds.

Specific examples of the alkenyl-containing organohalogen compound represented by the general formula (6) are as follows : $XCH_2C(O)O(CH_2)_nCH=CH_2$, $H_3CC(H)$ $(X)C(O)O(CH_2)_n$ $CH=CH_2$, $(H_3C)_2C(X)C(O)O(CH_2)_nCH=CH_2$, $CH_3$ $CH_2C(H)$ $(X)C(O)O(CH_2)nCH=CH_2$,

[Chemical Formula 2]

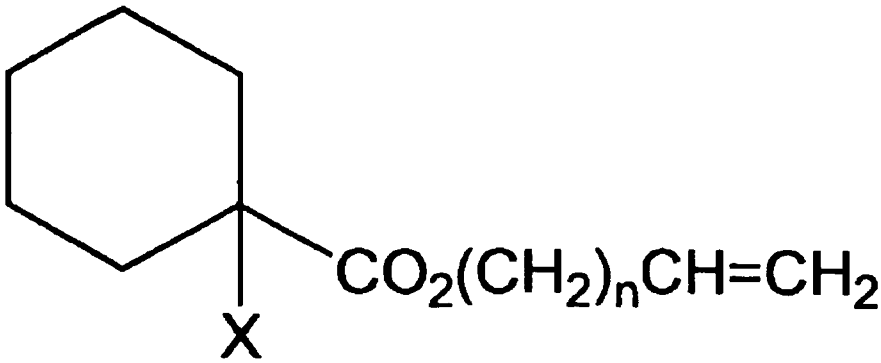

(in the above formulas, X is a chlorine, bromine or iodine atom and n is an integer of 0 to 20), $XCH_2C(O)O(CH_2)_nO(CH_2)_m CH=CH_2$, $H_3CC(H)$ $(X)C(O)O(CH_2)_nO(CH_2)_m$ $CH=CH_2$, $(H_3C)_2C(X)C(O)O(CH_2)_nO(CH_2)$ $_mCH=CH_2$, $CH_3CH_2C(H)(X)C(O)O(CH_2)$ $_nO(CH_2)$ $_mCH=CH_2$,

[Chemical Formula 3]

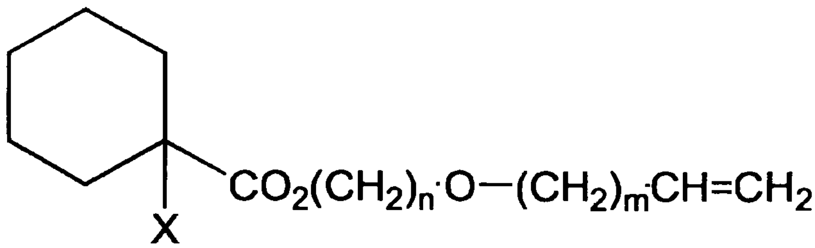

(in the above formulas, X is a chlorine, bromine or iodine atom; n is an integer of 1 to 20; m is an integer of 0 to 20) ; o, m, p-$XCH_2$-$C_6H_4$-$(CH_2)_n$-$CH=CH_2$, o, m, p-$CH_3C(H)$ (X)-$C_6H_4$-$(CH_2)_n$-$CH=CH_2$, o, m, p-$CH_3CH_2C(H)$ (X)-$C_6H_4$-$(CH_2)_n$-$CH=CH_2$, (in the above formulas, X is a chlorine, bromine or iodine atom; n is an integer of 0 to 20); o, m, p-$XCH_2$-$C_6H_4$-$(CH_2)_2$-O-$(CH_2)_m$-$CH=CH_2$, o, m, p-$CH_3C(H)$ (X)-$C_6H_4$-$(CH_2)_n$-O-$(CH_2)_m$-$CH=CH_2$, o, m, p- $CH_3$ $CH_2C(H)(X)$-$C_6H_4$-$(CH_2)_n$-O-$(CH_2)_m$-$CH=CH_2$, (in the above formulas, X is a chlorine, bromine or iodine atom;n is an integer of 1 to 20; m is an integer of 0 to 20); o, m, p-X $CH_2$-$C_6H_4$-O-$(CH_2)_n$-$C_H$=$CH_2$, o, m, p-$CH_3C(H)$ (X)-$C_6H_4$-O-$(CH_2)_n$-$CH=CH_2$, O, m, p-$CH_3$ $CH_2C(H)$ (X) - $C_6H_4$-O-$(CH_2)_n$- $CH=CH_2$, (in the above formulas, X is a chlorine, bromine or iodine atom; n is an integer of 0 to 20) ; o, m, p-$XCH_2$- $C_6H_4$-O-$(CH_2)$ $_n$-O-$(CH_2)_mCH=CH_2$, o, m, p-$CH_3C(H)(X)$-$C_6H_4$-O-$(CH_2)_n$-O-$(CH_2)_m$-$CH=CH_2$, o, m, p-$CH_3CH_2C(H)$ (X)-$C_6H_4$-O-$(CH_2)_n$-O-$(CH_2)_m$-$CH=CH_2$, (in the above formulas, X is a chlorine, bromine or iodine atom; n is an integer of 1 to 20; m is an integer of 0 to 20).

As the alkenyl-containing organohalogen compound, there may further be mentioned compounds represented by the general formula (7): $H_2C=C(R^5)$-$R^9$-$C(R^6)(X)$-$R^{10}$-$R^7$ (7) wherein $R^5$, $R^6$, $R^7$, $R^9$ and X are as defined above and $R^{10}$ represents a direct bond, -C(O)O-(ester group), -C(O)- (keto group) or an o-, m- or p-phenylene group.

$R^9$ is a direct bond or a bivalent organic group containing 1 to 20 carbon atoms (which may optionally contain one or more ether linkages) and, when it is a direct bond, the vinyl group is attached to the carbon atom to which the halogen atom is attached, hence the compound is an allyl halide. In this case, the carbon-halogen bond is activated by the neighboring vinyl group and therefore it is not always necessary for $R^{10}$ to be a C(O)O or phenylene group; thus, $R^{10}$ may be a direct bond. When $R^9$ is not a direct bond, it is desirable that $R^{10}$ is a C(O)O, C(O) or phenylene group so as to activate the carbon-halogen bond.

Specific examples of the compound of formula (7) are as follows: $CH_2=CH$ $CH_2X$, $CH_2=C(CH_3)CH_2X$, $CH_2=CHC(H)(X)CH_3$, $CH_2=C(CH_3)C(H)$ $(X)CH_3$, $CH_2=CHC$ (X) $(CH_3)_2$, $CH_2$ =CHC (H) (X) $C_2H_5$, $CH_2$=CHC (H) (X) CH $(CH_3)_2$, $CH_2$=CHC (H) (X) $C_6H_5$, $CH_2$=CHC (H) (X) $CH_2C_6H_5$, $CH_2=CHCH_2C$ (H) (X) -$CO_2R$, $CH_2$ =CH $(CH_2)_2C$ (H) (X) -$CO_2R$, $CH_2$=CH $(CH_2)$. $_3C(H)$ (X) -$CO_2R$, $CH_2$ =$CH(CH_2)_8C(H)$ (X) -$CO_2R$, $CH_2$=CH $CH_2C(H)$ (X) -$C_6H_5$, $CH_2$ =$CH(CH_2)_2C(H)$ (X)-$C_6H_5$ and $CH_2$=CH $(CH_2)_3C(H)$ (X)-$C_6H_5$ (in the above formulas, X represents a chlorine, bromine or iodine atom;

R is an alkyl, aryl, or aralkyl group containing to 20 carbon atoms), and the like. Specific examples of the alkenyl-containing sulfonyl halide compound are as follows: o-, m-, p- $CH_2=CH-(CH_2)_n-C_6H_4-SO_2X$ and o-, m-, p- $CH_2=CH-(CH_2)_n-O-C_6H_4-SO_2X$ (in the above formulas, X represents a chlorine, bromine or iodine atom; n is an integer of 0 to 20).

The above crosslinking silyl-containing organohalogen compound includes but is not limited to compounds having a structure represented by the general formula (8): $R^6 R^7C(X)-R^8-R^9-C(H)(R^5) CH_2-[Si(R^{11})_{2-b}(Y)_bO]_m-Si(R^{12})_{3-a}(Y)_a$ (8) wherein $R^5$, $R^6$, $R^7$, $R^8$, $R^9$ and X are as defined above; $R^{11}$ and $R^{12}$ each represents an alkyl, aryl or aralkyl group containing up to 20 carbon atoms or a triorganosiloxy group of the formula $(R')_3SiO-$ (where R' is a univalent hydrocarbon group containing 1 to 20 carbon atoms and the three R' groups may be the same or different) and, when two or more $R^{11}$ and/or $R^2$ groups are present, they may be the same or different; Y represents a hydroxyl group or a hydrolyzable group and, when two or more Y groups are present, they may be the same or different; a represents an integer of 0, 1, 2 or 3, b represents an integer of 0, 1 or 2 and m is an integer of 0 to 19, with the condition that the relation $a+mb \geqq 1$ should be satisfied.

Specific examples of the compound of the general formula (8) are: $XCH_2C(O)O(CH_2)_nSi(OCH_3)_3$, $CH_3C(H)(X)C(O)O(CH_2)_nSi(OCH_3)_3$, $(CH_3)_2C(X)C(O)O(CH_2)_nSi(OCH_3)_3$, $XCH_2C(O)O(CH_2)_nSi(CH_3)(OCH_3)_2$, $CH_3C(H)(X)C(O)O(CH_2)_nSi(CH_3)(OCH_3)_2$, $(CH_3)_2C(X)C(O)O(CH_2)_nSi(CH_3)(OCH_3)_2$, (in the above formulas, X represents a chlorine, bromine or iodine atom; n represents an integer of 0 to 20); $XCH_2C(O)O(CH_2)_nO(CH_2)_m Si(OCH_3)_3$, $H_3CC(H)(X)C(O)O(CH_2)_nO(CH_2)_mSi(OCH_3)_3$, $(H_3C)_2C(X)C(O)O(CH_2)_nO(CH_2)_mSi(OCH_3)_3$, $CH_3CH_2C(H)(X)C(O)O(CH_2)_nO(CH_2)_mSi(OCH_3)_3$, $XCH_2C(O)O(CH_2)_nO(CH_2)_m Si(CH3)(OCH_3)_2$, $H_3CC(H)(X)C(O)O(CH_2)_nO(CH_2)_m-Si(CH_3)(OCH_3)_2$, $(H_3C)_2C(X)C(O)O(CH_2)_nO(CH_2)_m-Si(CH_3)(-OCH_3)_2$, $CH_3CH_2C(H)(X)C(O)O(CH_2)_nO(CH_2)_m-Si(CH_3)(OCH_3)_2$, (in the above formulas, X represents a chlorine, bromine or iodine atom; n represents an integer of 1 to 20; m represents an integer of 0 to 20) ; o, m, p-$XCH_2-C_6H_4-(CH_2)_2Si(OCH_3)_3$, o, m, p-$CH_3C(H)(X)-C_6H_4-(CH_2)_2Si(OCH_3)_3$, o, m, p- $CH_3CH_2C(H)(X)-C_6H_4-(CH_2)_2Si(OCH_3)_3$, o, m, p-$XCH_2-C_6H_4-(CH_2)_3Si(OCH_3)_3$, o, m, p- $CH_3C(H)(X)-C_6H_4-(CH_2)_3Si(OCH_3)_3$, o, m, p-$CH_3CH_2C(H)(X)-C_6H_4-(CH_2)_3Si(OCH_3)_3$, o, m, p-$XCH_2-C_6H_4-(CH_2)_2-O-(CH_2)_3Si(OCH_3)_3$, o, m, p-$CH_3C(H)(X)-C_6H_4-(CH_2)_2-O-(CH_2)_3S-i(OCH_3)_3$, o, m, p-$CH_3CH_2C(H)(X)-C_6H_4-(CH_2)_2-O-(CH_2-)_3Si(OCH_3)_3$, o, m, p-$XCH_2-C_6H_4-O-(CH_2)_3Si(OCH_3)_3$, o, m, p-$CH_3C(H)(X)-C_6H_4-0-(CH_2)_3Si(OCH_3)_3$, o, m, p-$CH_3CH_2C(H)(X)-C_6H_4-O-(CH_2)_3S-i(OCH_3)_3$, o, m, p-$XCH_2-C_6H_4-O-(CH_2)_2-O-(CH_2)_3-Si-(OCH_3)_3$, o, m, p-$CH_3C(H)(X)-C_6H_4-O-(CH_2)_2-O-(CH_2)_3-Si(OCH_3)_3$, o, m, p-$CH_3CH_2C(H)(X)-C_6H_4-O-(CH_2)_2-O-(CH_2)_3Si(OCH_3)_3$, (in the above formulas, X represents a chlorine, bromine or iodine atom) and the like.

As further examples of the crosslinking silyl group-containing organohalogen compound, there may be mentioned compounds having a structure represented by the general formula (9):$(R^{12})_{3-a}(Y)_aSi-[OSi(R^{11})_{2-b}(Y)_b]_m-CH_2-C(H)(R^5)-R^9-C(R^6)(X)-R^{10}-R^7$ (9) wherein $R^5$, $R^6$, $R^7$, $R^9$, $R^{10}$, $R^{11}$, $R^{12}$, a, b, X and Y are as defined above and m is an integer from 0 to 19).

Specific examples of such compound are as follows:

$(CH_3O)_3SiCH_2CH_2C(H)(X)C_6H_5$, $(CH_3O)_2(CH_3)SiCH_2CH_2C(H)(X)C_6H_5$, $(CH_3O)_3Si(CH_2)_2C(H)(X)-CO_2R$, $(CH_3O)_2(CH_3)Si(CH_2)_2C(H)(X)-CO_2R$, $(CH_3O)_3Si(CH_2)_3C(H)(X)-CO_2R$, $(CH_3O)_2(CH_3)Si(CH_2)_3C(H)(X)-CO_2R$, $(CH_3O)_3Si(CH_2)_4C(H)(X)-CO_2R$, $(CH_3O)_2(CH_3)Si(CH_2)_4C(H)(X)-CO_2R$, $(CH_3O)_3Si(CH_2)_9C(H)(X)-CO_2R$, $(CH_3O)_2(CH_3)Si(CH_2)_9C(H)(X)-CO_2R$, $(CH_3O)_3Si(CH_2)_3C(H)(X)-C_6H_5$, $(CH_3O)_2(CH_3)Si(CH_2)_3C(H)(X)-C_6H_5$, $(CH_3O)_3Si(CH_2)_4C(H)(X)-C_6H_5$, $(CH_3O)_2(CH_3)Si(CH_2)_4C(H)(X)-C_6H_5$, (in the above formulas, X represents a chlorine, bromine or iodine atom; R represents an alkyl, aryl or aralkyl group containing up to 20 carbon atoms) and the like.

The hydroxyl-containing organohalogen or sulfonyl halide compound is not particularly limited but may be a compound of the formula: $HO-(CH_2)_n-OC(O)C(H)(R)(X)$ wherein X represents a chlorine, bromine or iodine atom; R represents a hydrogen atom or an alkyl, aryl or aralkyl group containing up to 20 carbon atoms; n represents an integer of 1 to 20.

The amino-containing organohalogen or sulfonyl halide compound is not particularly limited but may be a compound of the formula: $H_2N-(CH_2)_n-OC(O)C(H)(R)(X)$ wherein X represents a chlorine, bromine or iodine atom; R represents a hydrogen atom or an alkyl, aryl or aralkyl group containing up to 20 carbon atoms; n represents an integer of 1 to 20.

The epoxy-containing organohalogen or sulfonyl halide compound is not particularly limited but may be a compound of the formula:

[Chemical Formula 4]

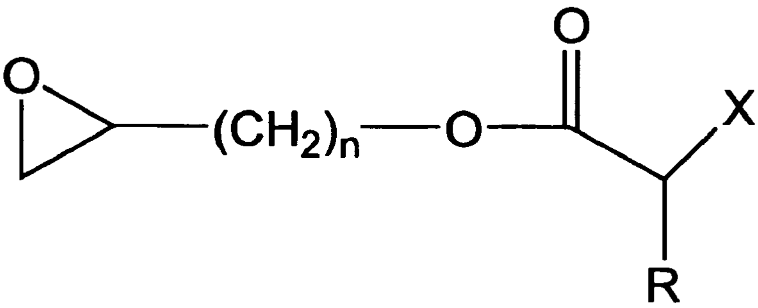

wherein X is a chlorine, bromine or iodine atom; R represents a hydrogen atom or an alkyl, aryl or aralkyl group containing up to 20 carbon atoms; n represents an integer of 1 to 20.

It is preferable to use an organohalogen or sulfonyl halide compound having 2 or more initiation points as the initiator to produce a polymer having 2 or more terminal structures (1) of the invention per molecule. Specific examples are:

[Chemical Formula 5]

o,m,p-$X-CH_2-C_6H_4-CH_2-X$

o,m,p- 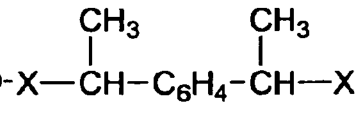 o,m,p- 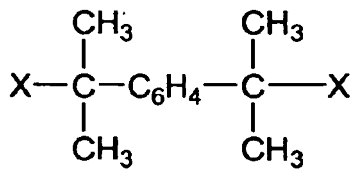

(in the above formulas, $C_6H_4$ stands for a phenylene group; X represents a chlorine, bromine or iodine atom)

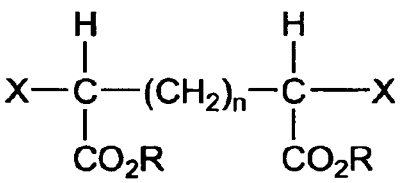 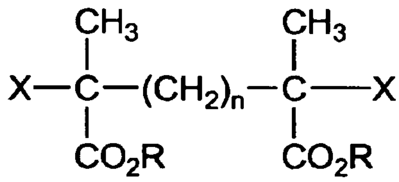

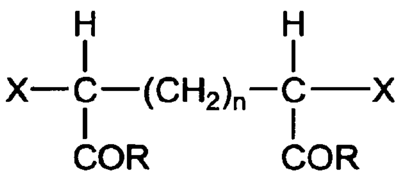 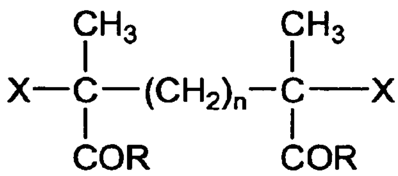

(in the above formulas, R represents an alkyl, aryl or aralkyl group containing up to 20 carbon atoms; n represents an integer of 0 to 20; X represents a chlorine, bromine or iodine atom)

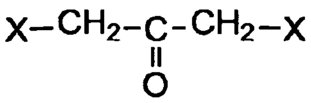
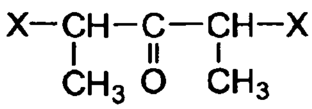
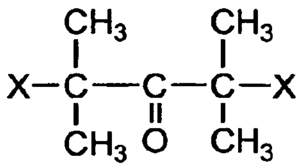

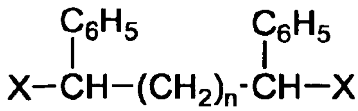

(in the above formulas, X represents a chlorine, bromine or iodine atom; n represents an integer of 0 to 20).
[Chemical Formula 6]

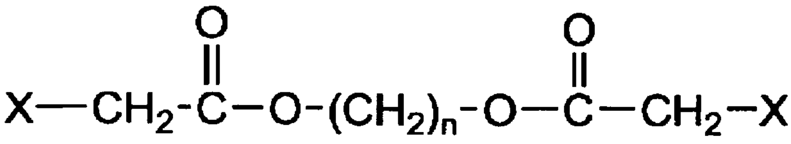

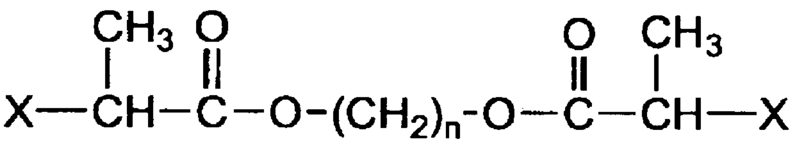

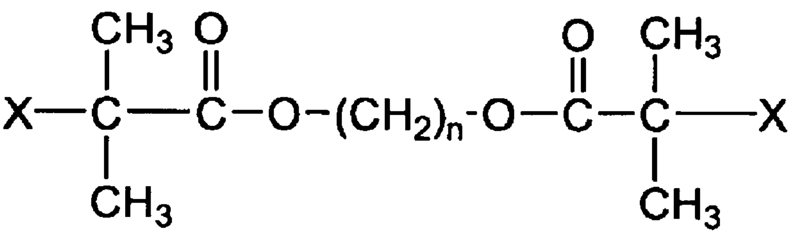

(in the above formulas, n represents an integer of 1 to 20; X represents a chlorine, bromine or iodine atom)

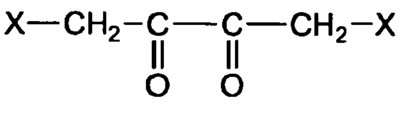
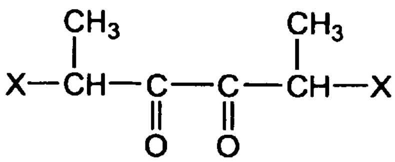

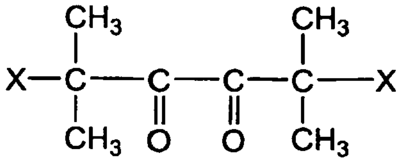

o,m,p- 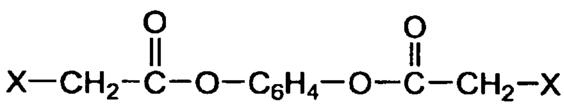

o,m,p- 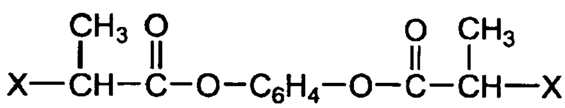

o,m,p- 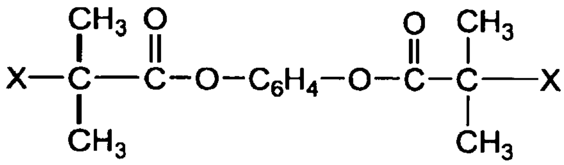

**o,m,p- X-$SO_2$-$C_6H_4$-$SO_2$-X**

(in the above formulas, X represents a chlorine, bromine or iodine atom)

The vinyl monomer for this polymerization reaction is not particularly limited but any of the monomers mentioned hereinabove can be employed with advantage.

The transition metal complex to be used as the polymerization catalyst is not particularly limited but includes, as preferred examples, transition metal complexes whose center metals belong to Group 7, 8, 9, 10 or 11 of the periodic table of the elements and, as more preferred species, complexes of zero-valence copper, univalent copper, bivalent ruthenium, bivalent iron or bivalent nickel. Copper complexes are particularly preferred.

As specific examples of the univalent copper compound, there may be mentioned cuprous chloride, cuprous bromide, cuprous iodide, cuprous cyanide, cuprous oxide and cuprous perchlorate. When a copper compound is used, a ligand, for example 2,2'-bipyridyl or a derivative thereof, 1,10-phenanthroline or a derivative thereof, or a polyamine such as tetramethylethylenediamine, pentamethyldiethylenetriamine or hexamethyltris(2-aminoethyl)amine, is added for improving catalytic activity. The tristriphenylphosphine complex of bivalent ruthenium chloride ($RuCl_2(PPh_3)_3$) is also suited for use as a catalyst. When a ruthenium compound is used as the catalyst, an aluminum alkoxide is added as an activator. Further, the bistriphenylphosphine complex of bivalent iron ($FeCl_2(PPh_3)_2$), the bistriphenylphosphine complex of bivalent nickel ($NiCl_2(PPh_3)_2$) and the bistributylphosphine complex of bivalent nickel ($NiBr_2(PBu_3)_2$) are also suited as catalysts. The polymerization can be carried out in the absence of a solvent or in any of various solvents. As the solvents, there may be mentioned hydrocarbon solvents such as benzene and toluene; ether solvents such as diethyl ether and tetrahydrofuran; halogenated hydrocarbon solvents such as methylene chloride and chloroform; ketone solvents such as acetone, methyl ethyl ketone and methyl isobutyl ketone; alcohol solvents such as methanol, ethanol, propanol, isopropyl alcohol, n-butyl alcohol and tert-butyl alcohol; nitrile solvents such as acetonitrile, propionitrile and benzonitrile; ester solvents such as ethyl acetate and butyl acetate; carbonate solvents such as ethylene carbonate and propylene carbonate; and so on. These may be used singly or two or more of them may be used in admixture. The polymerization can be carried out within the temperature range of at room temperature to 200 degree C, preferably 50 to 150 degree C., although such range is not critical.

<Functional Group Introduction Method >

The methods for producing the component (A) are not particularly limited. The component can be produced by first preparing vinyl based polymer having a reactive functional group with the use of aforementioned methods and then converting the reactive functional group into a substituted group with a (meth)acryloyl group. Introduction of a terminal functional group (1) into the vinyl based polymer will be described below.

Although the method for introducing a (meth)acryloyl group at an end of the vinyl based polymer is not limited, the following methods can be used:

(Introduction method 1) A method of reacting a vinyl polymer having halogen group (or halogen atom) at a terminal with a compound represented by the formula (2)

$M^{+-}OC(O)C(R^a)=CH_2$ (2)

(wherein $R^a$ represent hydrogen or an organic group having 1 to 20 carbon atoms and $M^+$ represents an alkali metal ion or quaternary ammonium ion).

A vinyl polymer having halogen group at a terminal represented by the general formula (3) is preferred.

$-CR^1R^2X$ (3)

(wherein $R^1$ and $R^2$ represent a group bonded to an ethylenically unsaturated group of a vinyl monomer, and X represents chlorine, bromine, or iodine)

(introduction method 2) A method of reacting a vinyl polymer terminated with a hydroxyl group with a compound represented by formula (4):

$$X^1C(O)C(R^a)=CH_2 \qquad (4)$$

(wherein $R^a$ represents hydrogen or an organic group having 1 to 20 carbon atoms and $X^1$ represents chlorine, bromine, or hydroxyl group)

(introduction method 3) A method of reacting a vinyl polymer terminated with a hydroxyl group with a diisocyanate compound and then reacting the residual isocyanate group with a compound represented by formula 5:

$$HO\text{-}R'\text{-}OC(O)C(R^a)=CH_2 \qquad (5)$$

(wherein $R^a$ represent hydrogen or an organic group having 1 to 20 carbon atoms and R' represents a bivalent organic group having 2 to 20 carbon atoms).

Each of these methods will be described in detail below.

<Method (1) for introducing a functional group>

In the method(1), a vinyl polymer having a halogen group at a terminal is reacted with a compound represented by the general formula (2). A vinyl polymer having a halogen group at a terminal is not limited but those having a terminal structure represented by the general formula (3) is preferred. Specific examples of $R^1$ and $R^2$ of formula (3), each of which represents a group bonded to an ethylenically unsaturated group of a vinyl monomer are hydrogen atm, methyl group, carbonyl group, carboxylate group, toluyl group, fluoro group, chloro group, trialkoxylsilyl group, phenylsulfonate group, carboximide group, and cyano group. The vinyl polymer having a halogen group at a terminal or a structure represented by the general formula (3), among others is produced by the method comprising polymerizing a vinyl monomer using the above-mentioned organic halide or halogenated sulfonyl compound as the initiator and a transition metal complex as the catalyst, or by the method comprising polymerizing a vinyl monomer using a halogen compound as the chain transfer agent. The former method is preferred, however.

The compound represented by the general formula (2) is not particularly limited. Thus, $R^a$ in the general formula (2) is an organic group containing 1 to 20 carbon atoms and includes, for example, aforementioned groups. Specific examples thereof also are the same as the aforementioned groups.

$M^+$ in the general formula (2) is a counter cation to the oxy anion and, as species of $M^+$, there may be mentioned alkali metal ions and quaternary ammonium ion. Specific examples of alkaline ion is the lithium ion, sodium ion and potassium ion. As the quaternary ammonium ions, there may be mentioned the tetramethylammonium ion, tetraethylammonium ion, tetrabenzylammonium ion, trimethyldodecylammonium ion, tetrabutylammonium ion, dimethylpiperidinium ion and the like. Among these, the sodium ion and potassium ion are preferred.

The compound of the general formula (2) is used preferably in an amount of 1 to 5 equivalents, more preferably 1.0 to 1.2 equivalents, relative to the terminal group of the general formula (3).

The solvent to be used in carrying out this reaction is not particularly limited but, since the reaction is a nucleophilic substitution reaction, a polar solvent is preferred. Thus, for example, tetrahydrofuran, dioxane, diethyl ether, acetone, dimethyl sulfoxide, dimethylformamide, dimethylacetamide, hexamethylphosphoric triamide, acetonitrile and the like are preferably used. The reaction temperature is not limited but generally it is carried out at 0 to 150 degree C, preferably at from 10 to 100 degree C.

<Method 2 for introducing terminal functional group>

In the method 2, a vinyl polymer terminated with a hydroxyl group is reacted with a compound represented by the general formula (4). The compound represented by the above general formula (4) is not particularly limited. Thus, $R^a$ in the general formula (4) is an organic group containing 1 to 20 carbon atoms and includes, for example, aforementioned groups. Specific examples thereof also are the same as the aforementioned groups.

The hydroxy-terminated vinyl polymer is produced by the method comprising polymerizing a vinyl monomer using the above-mentioned organic halide or halogenated sulfonyl compound as the initiator and a transition metal complex as the catalyst, or by the method comprising polymerizing a vinyl monomer using a hydroxy-containing compound as the chain transfer agent. The former method is preferred, however. These methods of producing hydroxy-terminated vinyl polymers are not restricted but include, for example, the following techniques.

(a) The technique comprising reacting a compound having both a polymerizable alkenyl group and a hydroxy group in one molecule, such as a compound represented by the general formula (10) given below, as a second monomer, in synthesizing a vinyl polymer by living radical polymerization $H_2C=C(R^{13})$- $R^{14}$-$R^{15}$-OH (10) wherein $R^{13}$ is a hydrogen atom or an organic group containing 1 to 20 carbon atoms, $R^{14}$ represents -C(O)O- (ester group) or an o-, m- or p-phenylene group and $R^{15}$ represents a direct bond or a divalent organic group containing 1 to 20 carbon atoms, which may optionally have one or more ether bonds. As for $R^{13}$, hydrogen atom and methyl group are preferred. When $R^{14}$ is an ester group, the compound is a (meth) acrylate compound and, when $R^{14}$ is a phenylene group, the compound is a styrene type compound. Example of $R^{15}$ are the same as those for $R^9$. The timing of subjecting the compound having both a polymerizable alkenyl group and a hydroxy group in one molecule to the reaction is not limited. When, however, rubber-like properties are particularly expected, it is preferred to effect the reaction of the monomer as a second one at the final stage of the polymerization reaction or after completion of the reaction of a predetermined monomer.

(b) The technique comprising reacting a compound having both a low-polymerizable alkenyl group and a hydroxy group in one molecule as a second monomer at the final stage of the polymerization reaction or after completion of the reaction of a predetermined monomer in synthesizing a vinyl polymer by living radical polymerization.
Such a compound is not particularly limited, but includes compounds represented by the general formula (11): $H_2C=C(R^{13})$-$R^{16}$-OH (11) wherein $R^{13}$ is as defined above and $R^{16}$ represents a divalent organic group containing 1 to 20 carbon atoms, which may optionally contain one or more ether bonds.
The compound represented by the above general formula (11) is not particularly limited but alkenyl alcohols such as 10-undecenol, 5-hexenol and allyl alcohol are preferred because of easy availability.

(c) The technique disclosed in Japanese Kokai Publication Hei-04-132706, namely the technique comprising effecting terminal hydroxy group introduction by hydrolyzing the halogen atom of a vinyl polymer having at least one carbon-halogen bond represented by the above general formula (3) as obtained by atom transfer radical polymerization or reacting that halogen atom with a hydroxy-containing compound.

(d) The technique comprising reacting a vinyl polymer having at least one carbon-halogen bond represented by the above general formula (3) as obtained by atom transfer radical polymerization with a hydroxy-containing stabilized carbanion represented by the general formula (12) for effecting halogen substitution. $M^+C^-(R^{17})$ $(R^{18})$-$R^{16}$-OH (12) wherein $R^{16}$ and $M^+$ are as defined above, $R^{17}$ and $R^{18}$ each represents an electron-attracting group capable of stabilizing the carbanion $C^-$ or one of them represents such an electron-attracting group and the other represents a hydrogen atom, an alkyl group containing 1 to 10 carbon atoms or a phenyl group. As the electron-attracting group, there may be mentioned, for example, - $CO_2R$ (ester group), -C(O)R (keto group), -CON($R_2$) (amide group), -COSR (thioester group), -CN (nitrile group) and -$NO_2$ (nitro group), particularly preferably a -$CO_2R$, -C(O)R, and -CN. The substituent R is an alkyl group containing 1 to 20 carbon atoms, an aryl group containing 6 to 20 carbon atoms or an aralkyl group containing 7 to 20 carbon atoms, preferably an alkyl group containing 1 to 10 carbon atoms or a phenyl group.

(e) The technique comprising reacting a vinyl polymer having at least one carbon-halogen bond represented by the above general formula (3) as obtained by atom transfer radical polymerization with a simple substance metal, such as zinc, or an organometallic compound and then reacting the thus-prepared enolate anion with an aldehyde or ketone.

(f) The technique comprising reacting a vinyl polymer having at least one terminal halogen, preferably in the form represented by the above general formula (3), with a hydroxy-containing compound represented by the general formula (13) given below or a hydroxy-containing compound represented by the general formula (14) given below or the like to effect substitution of a hydroxy-containing substituent for the above halogen. HO- $R^{16}$ -$O^-M^+$ (13) ($R^{16}$ and $M^+$ being as defined above); HO- $R^{16}$ -C(O)$O^-M^+$ (14) ($R^{16}$ and $M^+$ being as defined above).

In cases that no halogen is directly involved in hydroxy group introduction, as in (a) and (b), the technique (b) is more preferred in the practice of the invention because of easier controllability.
In cases that hydroxy group introduction is effected by converting the halogen atom of a vinyl polymer having at least one carbon-halogen bond, as in (c) to (f), the technique (f) is more preferred because of easier controllability.

The compound of the general formula (4) is used preferably in an amount of 1 to 10 equivalents, more preferably 1 to 5 equivalents, relative to the hydroxyl terminated vinyl polymer.

The solvent to be used in carrying out this reaction is not particularly limited but, since the reaction is a nucleophilic substitution reaction, a polar solvent is preferred. Thus, for example, tetrahydrofuran, dioxane, diethyl ether, acetone, dimethyl sulfoxide, dimethylformamide, dimethylacetamide, hexamethylphosphoric triamide, acetonitrile and the like are preferably used. The reaction temperature is not limited but generally it is carried out at 0 to 150.degree. C., preferably at from 10 to 100.degree. C.

<Method 3 for introducing terminal functional group>

In the method 3, a vinyl polymer terminated with hydroxyl group is reacted with a diisocyanate compound, and then the residual isocyanate group is reacted with a compound represented by formula (5):

$$HO\text{-}R'\text{-}OC\ (O)\ C\ (R^a)\text{=}CH_2 \qquad (5)$$

(wherein $R^a$ represents hydrogen or an organic group having 1 to 20 carbon atoms, and R' represents a divalent organic group having 2 to 20 carbon atoms.

Thus, $R^a$ in the formula (5) is an organic group containing 1 to 20 carbon atoms and includes, for example, aforementioned groups. Specific examples thereof also are the same as the aforementioned groups.
Examples of R' in the general formula (5), a divalent organic group having 2 to 20 carbon atoms, are alkylene group having 2 to 20 carbon atoms (ethylene, propylene, butylene and the like), arylene groups having 6 to 20 carbon atoms, and aralkylene group having 7 to 20 carbon atoms. The compound represented by the above general formula (5) is not particularly limited, but includes, as particularly preferred compound, 2-hydroxypropyl methacrylate. The vinyl polymer having a terminal hydroxyl group is the same as those described above.
The diisocyanate compound is not particularly limited but includes those known in the art. Thus, for example, tolylene diisocyanate, 4,4'-diphenylmethanediisocyanate, hexamethylene diisocyanate, xylylene diisocyanate, metaxylylene diisocyanate, 1,5-naphthalenediisocyanate, hydrogenated diphenylmethanediisocyanate, hydrogenated toluylene diisocyanate, hydrogenated xylylene diisocyanate and isophoronediisocyanate are exemplified. These may be used singly or two or more of them may be used combinedly. Blocked isocyanates may also be used.
For putting better weathering resistance to use, the use of aromatic ring-free diisocyanate compounds, such as hexamethylene diisocyanate and hydrogenated diphenylmethanediisocyanate, is preferred.
Diisocyanate compound is used preferably in an amount of 1 to 10 equivalents, more preferably 1 to 5 equivalents, relative to the hydroxyl terminated vinyl polymer. The compound represented by the general formula (5) is used preferably in an amount of 1 to 10 equivalents, more preferably 1 to 5 equivalents, relative to the residual isocyanate.
The solvent to be used in carrying out this reaction is not particularly limited but, a nonpolar solvent is preferred. The reaction temperature is not limited but generally it is carried out at 0 to 250 degree C, preferably at from 20 to 200 degree C.

<The component B>

The curable composition of the present invention includes photoradical initiator as the component (B). The photoradical initiator includes for example, acetophenone, propiophenone, benzophenone, xanthol, fluorene, benzaldehyde, anthraquinone, triphenylamine, carbazole, 3-methylacetophenone, 4-methylacetophenone, 3-pentylacetophenone, 2,2-dietoxyacetophenone, 4-methoxyacetophenone, 3-bromoacetophenone, 4-allylacetophenone, p-diacetylbenzene, 3-methoxybenzophenone, 4-methylbenzophenone, 4-chlorobenzophenone, 4,4'-dimethoxybenzophenone, 4-chloro-4'-benzylbenzophenone, 3-chloroxanthone, 3,9-dichloroxanthone, 3-chloro-8-nonylxanthone, benzoil, benzoin methyl ether, benzoin butyl ether, bis(4-dimethylaminophenyl) ketone, benzyl methoxy ketal, 2-chlorothioxanthone, 2,2-dimethoxy-1,2-diphenylethane-1-one, 1-hydroxy-cyclohexyl-phenyl-ketone, 2-hydroxy-2-methyl-1-phenyl-propane-1-one, 2-methyl-1-[4-(methylthio)phenyl]-2-morpholinopropane-1-one, 2-benzyl-2-dimethylamino-1-(4-morpholinophenyl)-buthanone-1 and the like. As specific examples, phenyl ketone compounds are preferred as they have a tackiness improving property.
An acylphosphine oxide-based photoradical initiator having excellent depth curability upon UV irradiation can be also mixed. Examples of the acylphosphine oxide-based radical initiator include 2,4,6-trimethylbenzoyl-diphenylphosphine oxide, bis(2,4,6-trimethylbenzoyl)-phenylphosphine oxide, bis(2,6-dimethoxybenzoyl)-2,4,4-trimethyl-pentylphosphine oxide, bis(2,6-dimethylbenzoyl)-phenylphosphine oxide, bis(2,4,6-trimethylbenzoyl)-isobutylphosphine oxide, bis(2,6-dimethoxybenzoyl)-isobutylphosphine oxide, bis(2,6-dimethoxybenzoyl)-phenylphosphine oxide, and the like. Of these photoradical initiators, 2,4,6-trimethylbenzoyl-diphenyl-phosphine oxide, bis(2,4,6-trimethylbenzoyl)-phenylphosphine oxide, and bis(2,6-dimethoxybenzoyl)-2,4,4-trimethyl-pentylphosphine oxide are preferred. These photoradical initiators may be used alone, or two or more kinds of them may be used in combination. Of these photoradical initiators, 1-hydroxy-cyclohexyl-phenyl-ketone, 2-hydroxy-2-methyl-1-phenyl-propan-1-one, 2,2-dimethoxy-1,2-diphenylethan-1-one, 2,4,6-trimethylbenzoyl-diphenyl-phosphine oxide, and bis(2,4,6-trimethylbenzoyl)-phenylphosphine oxide are preferred.
In the curable composition of the present invention, the acylphosphine oxide and the phenylketone-based compound can also be used in combination.
The amount of the photoradical initiator is from 0.001 to 10 parts based on 100 parts by weight (hereinafter

parts by weight are referred to as "parts") of the component (A), or 100 parts of the total amount of the component (A) and a polymerizable monomer and/or oligomer mixture described later when the polymerizable monomer and/or oligomer mixture is added. When a mixture of the photoradical initiators is used, the total amount of the mixture of the photoradical initiators is preferably within the above range.

<Component (C)>

The thermal radical initiator as the component (C) is used so as to thermally cure the component (A). There is no limitation on the thermal radical initiator as the component (C) and examples of the thermal radical initiator include an azo-based initiator, a peroxide initiator, a persulfate initiator, and the like.

Examples of a proper azo-based initiator include, but are not limited to, 2,2'-azobis(4-methoxy-2,4-dimethylvaleronitrile) (VAZO 33), 2,2'-azobis(2-amidinopropane) dihydrochloride (VAZO 50), 2,2'-azobis(2,4-dimethylvaleronitrile) (VAZO 52), 2,2'-azobis(isobutyronitrile) (VAZO 64), 2,2'-azobis-2-methylbutyronitrile (VAZO 67), and 1,1-azobis(1-cyclohexanecarbonitrile) (VAZO 88) (all of which are available from DuPont Chemical); 2,2'-azobis(2-cyclopropylpropionitrile) and 2,2'-azobis(methylisobutyrate) (V-601) (which are available from Wako Pure Chemical Industries, Ltd.).

Examples of a proper peroxide initiator include, but are not limited to, benzoyl peroxide, acetyl peroxide, lauroyl peroxide, decanoyl peroxide, dicetyl peroxydicarbonate, and di(4-t-butylcyclohexyl)peroxy dicarbonate (Perkadox 16S) (which are available from Akzo Nobel); di(2-ethylhexyl)peroxy dicarbonate and t-butylperoxy pivalate (Lupersol 11) (which is available from Elf Atochem); t-butylperoxy-2-ethylhexanoate (Trigonox 21-C50) (which is available from Akzo Nobel); dicumyl peroxide; and the like.

Examples of a proper persulfate initiator include, but are not limited to, potassium persulfate, sodium persulfate, ammonium persulfate, and the like.

These thermal radical initiators may be used alone, or two or more kinds of them may be used in combination. Of these thermal radical initiators, those selected from the group consisting of an azo-based initiator and a peroxide initiator are preferred. 2,2'-azobis(methyl isobutyrate), benzoyl peroxide, t-butylperoxy pivalate, and di(4-t-butylcyclohexyl)peroxy dicarbonate, and a mixture thereof are more preferred.

The thermal radical initiator used in the present invention exists in a catalytically effective amount. The amount of the thermal radical initiator is from about 0.01 to 3 parts, and more preferably from about 0.025 to 2 parts based on 100 parts of the component (A), or 100 parts of the total amount of the component (A) and a polymerizable monomer and/or oligomer mixture when the polymerizable monomer and/or oligomer mixture is added. When a mixture of the thermal radical initiators is used, the total amount of the mixture of the thermal radical initiators is preferably within the above range.

<Component (D) >

In the curable composition of the present invention, a redox-based initiator can also be used in combination. Examples of a proper redox (oxidation-reduction)-based initiator include, but are not limited to, a combination of the persulfate initiator and a reducing agent (sodium hydrogen metasulfite, sodium hydrogen sulfite, etc.); a combination of an organic peroxide and tertiary amine, for example, a combination of benzoyl peroxide and dimethylaniline, or a combination of cumene hydroperoxide and anilines; a combination of an organic peroxide and a transition metal, for example, a combination of cumene hydroperoxide and cobalt naphthate; and the like. A combination of an organic peroxide and a tertiary amine and a combination of an organic peroxide and a transition metal are preferred, and a combination of cumene hydroperoxide and anilines and a combination of cumene hydroperoxide and cobalt naphthate are more preferred. Other initiators can also be used and examples of the other initiators include, but are not limited to, pinacol such as tetraphenyl 1,1,2,2-ethanediol, and the like.

There is no limitation on the amount of the redox-based initiator to be added. The amount of the redox-based initiator is preferably from 0.001 to 10 parts based on 100 parts of the component (A), or 100 parts of the total amount of the compound (A) and a polymerizable monomer and/or oligomer mixture described later when the polymerizable monomer and/or oligomer mixture is added.

<Curable Composition>

As described above, the curable composition of the present invention is a curable composition for both photoradical curing and thermal radical curing, containing a component (A), a component (B) and a component (C) as essential components. If necessary, the curable composition can contain a component (D).

Furthermore, a polymerizable monomer and/or an oligomer can be used in combination for the purpose of improving surface curability, imparting toughness and improving workability due to decrease in viscosity.

<Polymerizable Monomer and/or Oligomer>

The polymerizable monomer and/or oligomer may be preferably a monomer and/or oligomer having a radical polymerizable group in terms of curability.

Examples of the radical polymerizable group include a (meth)acryloyl-based group such as a (meth)acryl group, a styrene group, an acrylonitrile group, a vinyl ester group, an N-vinyl pyrrolidone group, an acrylamide group, a conjugated diene group, a vinylketone group, a vinyl chloride group, and the like. Of these groups, those having a (meth)acryloyl-based group, which is similar to that of a vinyl-based polymer used in the present invention, are preferred.

Specific examples of the monomer include a (meth) acrylate-based monomer, a cyclic acrylate, a styrene-based monomer, acrylonitrile, a vinyl ester-based monomer, N-vinyl pyrrolidone, an acrylamide-based monomer, a conjugated diene-based monomer, a vinylketone-based monomer, a vinyl halide/vinylindene halide-based monomer, a polyfunctional monomer, and the like. Examples of the (meth) acrylate-based monomer include methyl (meth)acrylate, ethyl (meth)acrylate, n-propyl (meth)acrylate, isopropyl (meth)acrylate, n-butyl (meth)acrylate, isobutyl (meth)acrylate, tert-butyl (meth)acrylate, n-pentyl (meth)acrylate, n-hexyl (meth)acrylate, cyclohexyl (meth)acrylate, n-heptyl (meth)acrylate, n-octyl (meth)acrylate, isooctyl (meth)acrylate, 2-ethylhexyl (meth)acrylate, nonyl (meth)acrylate, isononyl (meth)acrylate, decyl (meth)acrylate, dodecyl (meth)acrylate, phenyl (meth)acrylate, toluyl (meth)acrylate, benzyl (meth)acrylate, 2-methoxyethyl (meth)acrylate, 3-methoxybutyl (meth)acrylate, 2-hydroxyethyl (meth)acrylate, 2-hydroxypropyl (meth)acrylate, stearyl (meth)acrylate, glycidyl (meth)acrylate, 2-aminoethyl (meth)acrylate, γ-(methacryloyloxypropyl)trimethoxysilane, an ethylene oxide adduct of (meth)acrylic acid, trifluoromethylmethyl (meth)acrylate, 2-trifluoromethylethyl (meth)acrylate, 2-perfluoroethylethyl (meth)acrylate, 2-perfluoroethyl-2-perfluorobutylethyl (meth)acrylate, 2-perfluoroethyl (meth)acrylate, perfluoromethyl (meth)acrylate, diperfluoromethylmethyl (meth)acrylate, 2-perfluoromethyl-2-perfluoroethylethyl (meth)acrylate, 2-perfluorohexylethyl (meth)acrylate, 2-perfluorodecylethyl (meth)acrylate, 2-perfluorohexadecylethyl (meth)acrylate, and the like. The monomer further includes compounds represented by the following formulas. In the following formulas, n represents an integer of 0 to 20.

[Chemical Formula 7]

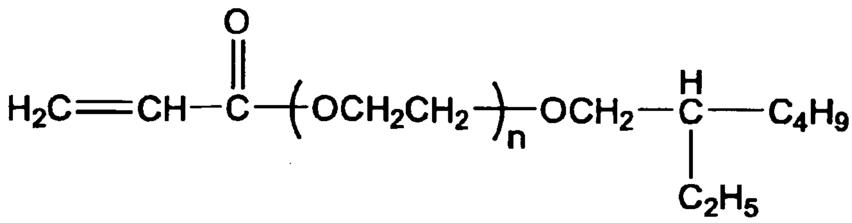

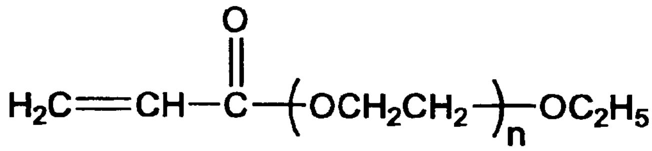

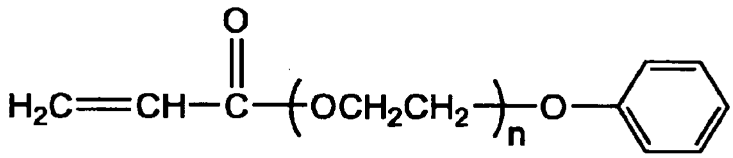

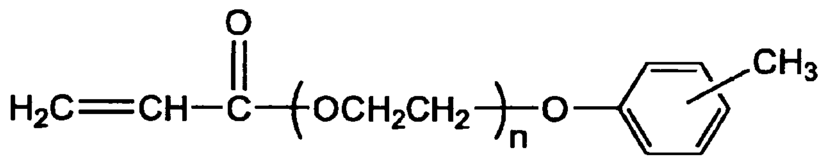

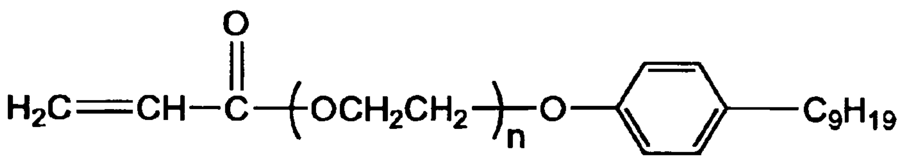

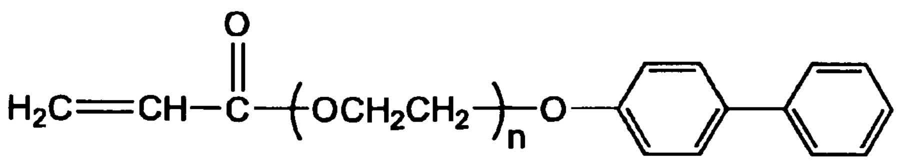

[Chemical Formula 8]

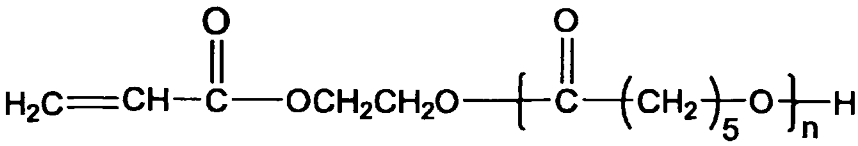

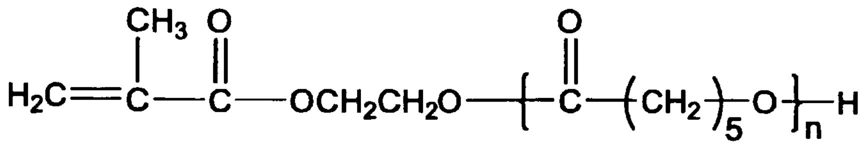

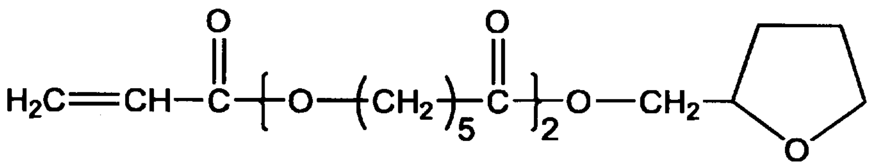

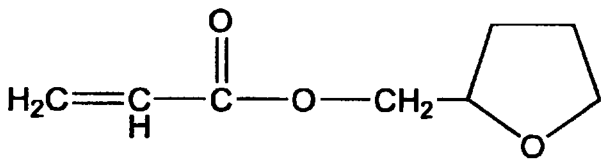

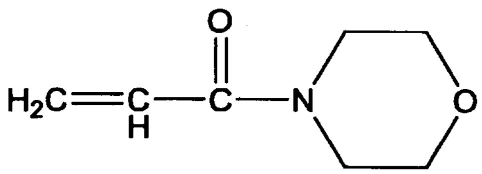

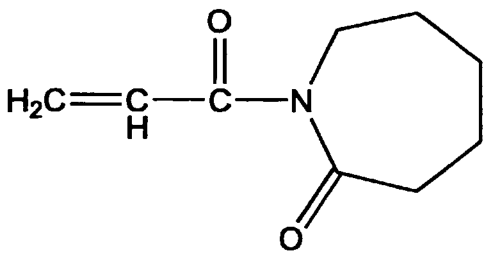

[Chemical Formula 9]

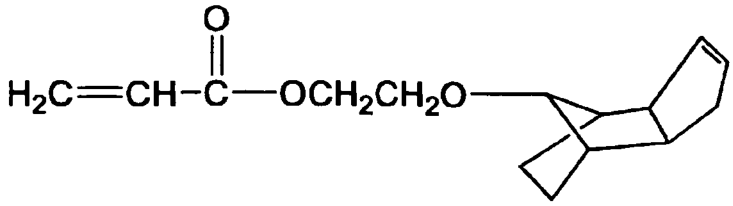

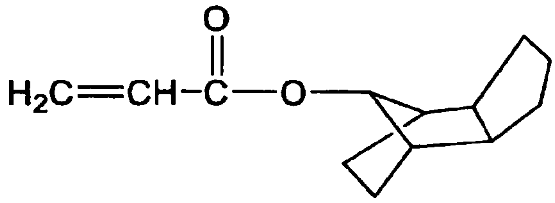

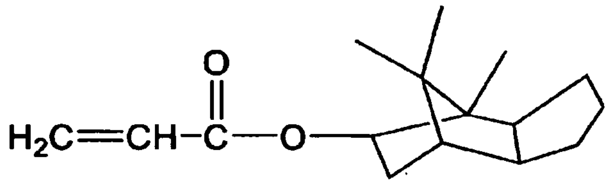

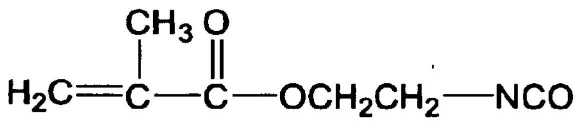

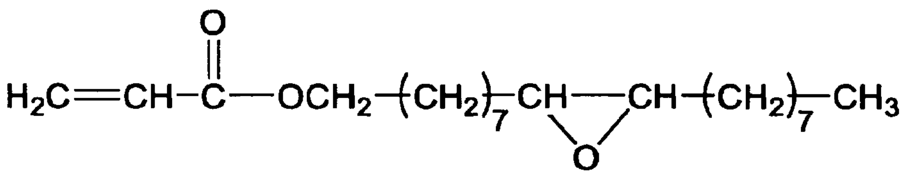

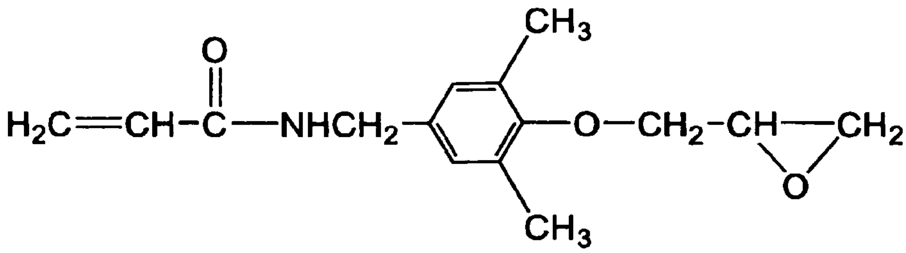

[Chemical Formula 10]

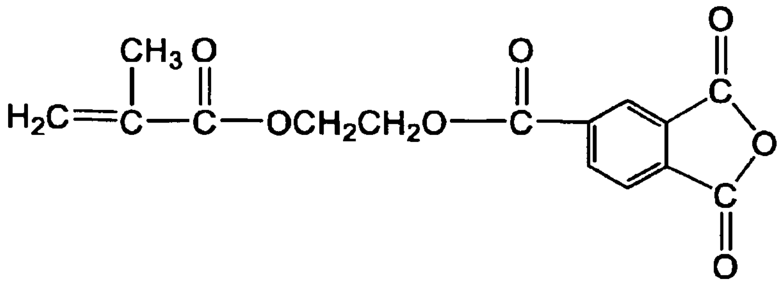

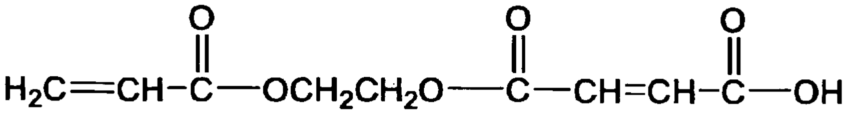

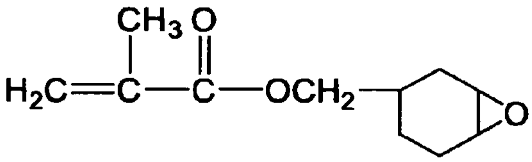

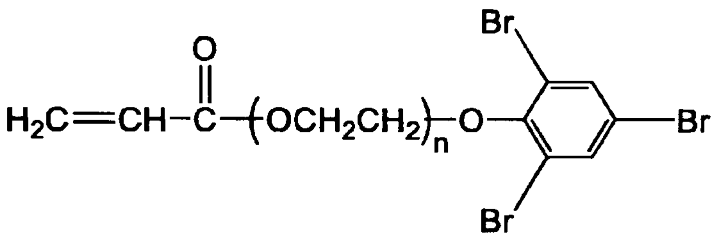

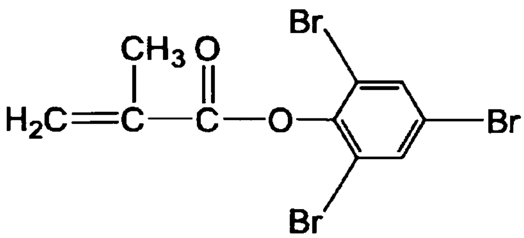

[Chemical Formula 11]

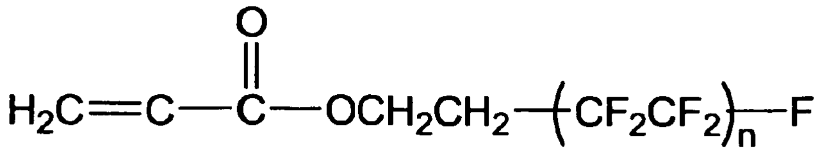

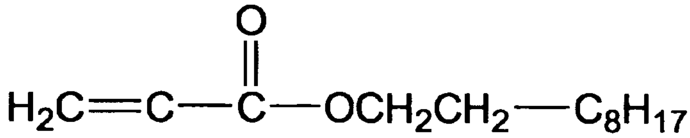

Examples of the styrene-based monomer include styrene, $\alpha$-methylstyrene, and the like. Examples of the vinyl ester-based monomer include vinyl acetate, vinyl propionate, vinyl butyrate, and the like. Examples of the acrylamide-based monomer include acrylamide, N,N-dimethylacrylamide, and the like. Examples of the conjugated diene-based monomer include butadiene, isoprene, and the like. Examples of the vinylketone-based monomer include methyl vinyl ketone, and the like. Examples of the vinyl halide/vinylidene halide-based monomer include vinyl chloride, vinyl bromide, vinyl iodide, vinylidene chloride, vinylidene bromide, and the like.

Examples of the polyfunctional monomer include trimethylolpropane triacrylate, neopentyl glycol polypropoxy diacrylate, trimethylolpropane polyethoxy triacrylate, bisphenol F polyethoxy diacrylate, bisphenol A polyethoxy diacrylate, dipentaerythritol polyhexanolide hexaacrylate, tris(hydroxyethyl)isocyanurate polyhexanolide triacrylate, tricyclodecanedimethylol diacrylate 2-(2-acryloyloxy-1,1-dimethyl)-5-ethyl-5-acryloyloxymethyl-1,3-dioxane, tetrabromobisphenol A diethoxy diacrylate, 4,4-dimercaptodiphenyl sulfide dimethacrylate, polytetraethylene glycol diacrylate, 1,9-nonanediol diacrylate, ditrimethylolpropane tetraacrylate, and the like.

Examples of the oligomer include an epoxy acrylate-based resin such as a bisphenol A type epoxy acrylate resin, a phenol novolak type epoxy acrylate resin, a cresol novolak type epoxy acrylate resin, and a COOH group-modified epoxy acrylate-based resin; an urethane acrylate-based resin obtained by reacting an urethane resin obtained from polyol (polytetramethylene glycol, polyesterdiol of ethylene glycol and adipic acid, $\varepsilon$-caprolactone-modified polyesterdiol, polypropylene glycol, polyethylene glycol, polycarbonatediol, hydroxyl group-terminated hydrogenated polyisoprene, hydroxyl group-terminated polybutadiene, hydroxyl group terminated polyisobutylene, etc.) and an organic isocyanate (tolylene diisocyanate, isophorone diisocyanate, diphenylmethane diisocyanate, hexamethylene diisocyanate, xylylene diisocyanate, etc.) with hydroxyl group-containing (meth)acrylate (hydroxyethyl (meth)acrylate, hydroxypropyl (meth)acrylate, hydroxybutyl (meth)acrylate, pentaerythritol triacrylate, etc.); a resin obtained by introducing a (meth)acryl group into the polyol via an ester bond; and a polyester acrylate-based resin, a poly(meth)acryl acrylate-based resin (a poly(meth)acrylic acid ester-based resin having a polymerizable reactive group), and the like.

Of these monomers and oligomers, a monomer and/or oligomer having a (meth)acryloyl-based group may be preferred. Further, the number average molecular weight of the polymerizable monomer and/or oligomer is preferably 5,000 or less. When the monomer is used for the purpose of improving surface curability and decreasing viscosity for improvement of workability, the molecular weight is more preferably 1,000 or less because of good compatibility.

The amount of the polymerizable monomer and/or oligomer to be used is preferably from 1 to 200 parts, and more preferably from 5 to 100 parts, based on 100 parts of the component (A) in terms of improving surface curability, imparting toughness and improving workability due to decrease in viscosity.

<Various additives>

If necessary, various additives that can regulate properties of the curable composition of the invention can be further added to the composition.

<Solvents>

Any of various organic solvents can be added to the curable composition of the present invention to improve workability upon coating and excellent drying properties before and after curing. Solvent having 50 to 180 degree C of boiling points are preferred because of workability upon coating and excellent drying properties before and after curing. As the solvents, alcohol solvents such as methanol, ethanol, propanol, isopropanol, n-butyl alcohol and isobutanol; ester solvents such as methyl acetate, ethyl acetate, butyl acetate, ethyleneglycol monoethyl ether, ethyleneglycol monoethyl

ether acetate, and ethyleneglycol monobuthyl ether; ketone solvents such as acetone, methyl ethyl ketone and methyl isobuthyl ketone; aromatic solvents such as toluene and xylene; and cyclic ether such as dioxane; and so on can be exemplified. The solvent can be used alone or in combination of two or more. The amount of solvent to be used is 1 to 900 parts based on 100 parts of the component (A) taking into account of balance between finished condition, workability, and a drying property.

<Reinforcing silica>

Reinforcing silica can be added to the curable composition of the present invention to improve strength of a cured product. Specific examples thereof include fumed silica and precipitating silica and the like. Those having particle diameter of 50μm or less and specific surface area of $80m^2/g$ or more are preferable for the effect of reinforcing. The method for measuring a specific surface area will be described later.
Also, surface treated silica by e.g., organo-silane, organosilazane and diorganocyclopolysiloxane is more preferred due to excellent flowability for molding of the composition including the surface treated silica.
Specific examples of such reinforcing silica are not limited but include Aerosil (NIPPON AEROSIL CO., LTD), one of the fumed silica, and Nipsil (TOSOHSILICA CORPORATION), one of the precipitating silica.

The reinforcing silica can be used alone or in combination of two or more. The amount of reinforcing silica is not limited but preferably 0.1 to 100 parts, more preferably 0.5 to 80 parts, and further more preferably 1 to 50 parts based on 100 parts of the component (A). The amount of less than 0.1 of the reinforcing silica cannot exert reinforcing effect in some occasion and the amount of more than 100 parts undermines workability of the curable composition.

<Fillers>

Various filler can be optionally added other than aforementioned reinforcing silica to the curable composition of the present invention. The fillers are not particularly limited but include reinforcing fillers such as wood powder, pulp, cotton chip, asbestos, glass fiber, carbon fiber, mica, walnut shell powder, chaff powder, graphite, diatomaceous earth, white clay, dolomite, silicic anhydride, silicic acid hydrate, carbon black and the like; fillers such as ground calcium carbonate, gluey calcium carbonate, magnesium carbonate, diatomaceous earth, calcined clay, clay, tarc, oxidized titanium, bentonite, organic bentonite, ferric oxide, powder of ferric oxide, fine powder of aluminum, flint powder, zinc oxide, activated zinc oxide, powder of zinc, zinc carbonate, and volcanic soil balloon; fibrous fillers such as asbestos, glass fiber, glass filament, carbon fiber, Kevlar fiber, polyethylene fiber, and the like. Among them, carbon black, calcium carbonate, titanium oxide, and tarc are preferred. When cured article with low strength and high elongation is desired, those selected from titanium oxide, calcium carbonate, tarc, ferric oxide, zinc oxide, and volcanic soil balloon can be added.

In general, calcium carbonate having a smaller specific surface area shows insufficient improving effect on the strength at break, elongation at break, adhesiveness and weather resistant adhesiveness of the cured product. Calcium carbonate having a greater specific surface area shows sufficient improving effect on the strength at break, elongation at break, adhesiveness, and weather resistant adhesiveness of the cured product. Furthermore, calcium carbonate is more preferably surface-treated with a surface treating agent. When surface-treated calcium carbonate is used, it is expected that the workability of the composition of the invention be improved and the effects of improving the adhesiveness and weather-resistant adhesiveness of the curable composition be more improved as compared with the use of non-surface-treated calcium carbonate.

Useful as the surface treating agent are organic substances such as fatty acids, fatty acid soaps and fatty acid esters, various surfactants, and various coupling agents such as silane coupling agents and titanate coupling agents. Specific examples include, but are not limited to, fatty acids such as caproic acid, caprylic acid, pelargonic acid, capric acid, undecanoic acid, lauric acid, myristic acid, palmitic acid, stearic acid, behenic acid and oleic acid, sodium, potassium and other salts of such fatty acids, and alkyl esters of such fatty acids. As specific examples of the surfactants, there may be mentioned sulfate ester type anionic surfactants such as polyoxyethylene alkyl ether sulfate esters and long-chain alcohol sulfate esters, and sodium, potassium and other salts thereof, sulfonic acid type anionic surfactants such as alkylbenzenesulfonic acids, alkylnaphthalenesulfonic acids, paraffinsulfonic acids, alpha-olefinsulfonic acids and alkylsulfosuccinic acid, and sodium, potassium and other salts thereof, and the like.

In the surface treatment, the surface treating agent is used in an amount preferably within the range of 0.1 to 20% by weight, more preferably within the range of 1 to 5% by weight, relative to calcium carbonate. When the amount for treatment is smaller than 0.1% by weight, the effects of improving the workability, adhesiveness and weather-resistant adhesiveness may be insufficient and, when it exceeds 20% by weight, the storage stability of the curable composition may decrease. When calcium carbonate is used in expectation of producing the effects of improving the thixotropic properties of the formulations and the strength at break, elongation at break, adhesion, weather-resistant adhesion and the like of the cured product, in particular, precipitated calcium carbonate is preferably used, although this does not mean any particular restriction. On the other hand, ground calcium carbonate is sometimes added for the purpose of

reducing the viscosity of the formulations, increasing the weight thereof and reducing the cost, for example. When ground calcium carbonate is used, such species as mentioned below can be used.

Ground calcium carbonate is prepared from natural chalk, marble, limestone or the like by mechanical grinding/processing. The method of grinding includes the dry method and wet method. Wet ground products are unfavorable in many cases since they often deteriorate the storage stability of the curable composition of the invention. Upon classification, ground calcium carbonate gives various products differing in average particle size. In cases where the effects of improving the strength at break, elongation at break, adhesiveness and weather-resistant adhesiveness are expected, the specific surface area value is preferably not less than 1.5$m^2/g$ and not more than 50 $m^2/g$, more preferably not less than 2 $m^2/g$ and not more than 50 $m^2/g$, still more preferably not less than 2.4 $m^2/g$ and not more than 50 $m^2/g$, most preferably not less than 3 $m^2/g$ and not more than 50 $m^2/g$, although this does not mean any particular restriction. When the specific surface area is smaller than 1.5 $m^2/g$, those improving effects may be insufficient. Of course, the above does not apply to the cases where it is only intended to reduce the viscosity and/or increase the weight.

The specific surface area value is the measured value obtained by using, as the measurement method, the air permeation method (method for specific surface area determination based on the permeability of a powder-packed layer to air) carried out according to JIS K 5101. Preferred for use as the measuring instrument is a Shimadzu model SS-100 specific surface area measuring apparatus.

Those fillers may be used singly or two or more of them may be used in combination according to the intended purpose or necessity. For example, the combined use, according to need, of ground calcium carbonate having a specific surface area value of not smaller than 1.5 $m^2/g$ and precipitated calcium carbonate is fully expected to suppress the viscosity increase in the formulations to a moderate level and produce the effects of improving the strength at break, elongation at break, adhesiveness and weather-resistant adhesiveness of cured products, although this does not mean any particular restriction.

When a filler is used, the filler is preferably used in an amount within the range of 5 to 1,000 parts by weight, more preferably within the range of 10 to 500 parts by weight, particularly preferably within the range of 20 to 300 parts by weight, per 100 parts by weight of the crosslinkable silyl group-containing polymer. When the addition level is lower than 5 parts by weight, the effects of improving the strength at break, elongation at break, adhesiveness and weather-resistant adhesiveness may be insufficient and, when the amount exceeds 1,000 parts by weight, the workability of the curable composition may deteriorate. Those fillers may be used singly or two or more of them may be used in combination.

<Adhesion imparting resin>

To the composition of the present invention can be added an adhesion-imparting resin, although it is not imperative, because of (meth)acryl polymer, which is preferred as a main chain. Specific examples of such adhesion-imparting resins include phenolic resins, modified phenolic resins, cyclopentadiene-phenol resins, xylene resins, cumarone resins, petroleum resin, terpene resins, terpene-phenolic resins, rosin ester resins, and the like. The adhesion-imparting resins are used within a range from 0.1 to 100 parts by weight with respect to 100 parts by weight of the organic polymer (A) in view of the balance between mechanical properties, heat resistance, oil resistance and adhesiveness of the cured product.

<Antioxidant>

The curable composition of the present invention may contain an antioxidant so as to adjust physical properties.

Since an acrylic polymer is a polymer which is originally excellent in heat resistance, weatherability and durability, it is not necessarily to contain an antioxidant. However, conventionally known antioxidants and photostabilizers can be appropriately used. The antioxidant can also be used to control polymerization upon polymerization and physical properties can be controlled.

Various antioxidants are known and examples thereof include, but are not limited to, various antioxidants described in "Antioxidant Handbook" issued by TAISEISHA LTD., and "Deterioration and Stabilization of Polymer Materials" (pp. 235 to 242) issued by CMC Publishing Co., Ltd. Examples of the antioxidant include thioether-based antioxidants such as MARK PEP-36 and MARK AO-23 (all of which are manufactured by ADEKA CORPORTAION); phosphorous-based antioxidants such as Irgafos 38, Irgafos 168, and Irgafos P-EPQ (all of which are manufactured by Ciba Speciality Chemicals Inc.); hindered phenol-based compounds; and the like. Of these antioxidants, the following hindered phenol-based compounds are preferred.

Specific examples of the hindered phenol-based compound include 2,6-di-tert-butyl-4-methylphenol, 2,6-di-tert-butyl-4-ethylphenol, mono- (or di- or tri-) ($\alpha$-methylbenzyl)phenol, 2,2'-methylenebis(4-ethyl-6-tert-butylphenol), 2,2'-methylenebis(4-methyl-6-tert-butylphenol), 4,4'-butylidenebis(3-methyl-6-tert-butylphenol), 4,4'-thiobis(3-methyl-6-tert-butylphenol), 2,5-di-tert-butylhydroquinone, 2,5-di-tert-amylhydroquinone, triethylene glycol-bis-[3-(3-t-butyl-5-methyl-4-hydroxyphenyl)propionate], 1,6-hexanediol-bis[3-(3,5-di-t-butyl-4-hydroxyphenyl)propionate], 2,4-bis-(n-octylthio)-6-(4-hydroxy-3,5-di-t-butylanilino)-1,3,5-triazine, pentaerythritol-tetrakis[3-(3,5-di-t-butyl-4-hydroxyphenyl)propionate], 2,2-thio-diethylenebis[3-(3,5-di-t-butyl-4-hydroxyphenyl)propionate], octadecyl-3-(3,5-di-t-butyl-4-hydroxyphenyl)propionate, N,N'-hexamethylenebis(3,5-di-t-butyl-4-hydroxy-hydrocinnamamide), 3,5-di-t-butyl-4-hydroxy-benzylphosphonate-diethyl ester, 1,3,5-trimethyl-2,4,6-tris(3,5-di-t-butyl-4-hydroxybenzyl)benzene, bis(ethyl 3,5-di-t-butyl-4-hydroxybenzylphosphonate)calcium, tris-(3,5-di-t-butyl-4-hydroxybenzyl)isocyanurate, 2,4-2,4-bis[(octylthio)methyl]o-cresol, N,N'-bis[3-(3,5-di-t-butyl-4-hydroxyphenyl)propionyl]hydrazine, tris(2,4-di-t-butylphenyl)phosphite, 2-(5-methyl-2-hydroxyphenyl)benzotriazole, 2-[2-hydroxy-3,5-bis($\alpha$,$\alpha$-dimethylbenzyl)phenyl]-2H-benzotriazole, 2-(3,5-di-t-butyl-2-hydroxyphenyl)benzotriazole, 2-(3-t-butyl-5-methyl-2-hydroxyphenyl)-5-chlorobenzotriazole, 2-(3,5-di-t-butyl-2-hydroxyphenyl)-5-chlorobenzotriazole, 2-(3,5-di-t-amyl-2-hydroxyphenyl)benzotriazole, 2-(2'-hydroxy-5'-t-octylphenyl)-benzotriazole, a condensate with methyl-3-[3-t-butyl-5-(2H-benzotriazol-2-yl)-4-hydroxyphenyl]propionate-polyethylene glycol (molecular weight: about 300), a hydroxyphenylbenzotriazole derivative, bis(1,2,2,6,6-pentamethyl-4-piperidyl) 2-(3,5-di-t-butyl-4-hydroxybenzyl)-2-n-butylmalonate, 2,4-di-t-butylphenyl-3,5-di-t-butyl-4-hydroxybenzoate, and the like.

Examples of the trade name of the hindered phenol-based compound include, but are not limited to, NOCRAC 200, NOCRAC M-17, NOCRAC SP, NOCRAC SP-N, NOCRAC NS-5, NOCRAC NS-6, NOCRAC NS-30, NOCRAC 300, NOCRAC NS-7, NOCRAC DAH (all of which are manufactured by OUCHI SHINKO CHEMICAL INDUSTRIAL CO., LTD.); MARK AO-30, MARK AO-40, MARK AO-50, MARK AO-60, MAARK AO-616, MARK AO-635, MARK AO-658, MARK AO-80, MARK AO-15, MARK AO-18, MARK 328, and MARK AO-37 (all of which are manufactured by ADEKA CORPORTAION); IRGANOX-245, IRGANOX-259, TRGANOX-565, IRGANOX-1010, IRGANOX-1024, IRGANOX-1035, IRGANOX-1076, IRGANOX-1081, IRGANOX-1098, IRGANOX-1222, IRGANOX-1330, and IRGANOX-1425WL (all of which are manufactured by Ciba Speciality Chemicals Inc.); Sumilizer GA-80 (which is manufactured by Sumitomo Chemicals Co., Ltd.); and the like.

The antioxidant further includes a monoacrylate phenol-based antioxidant having both an acrylate group and a phenol group, a nitroxide compound, and the like. Examples of the monoacrylate phenol-based antioxidant include 2-t-butyl-6-(3-t-butyl-2-hydroxy-5-methylbenzyl)-4-methylphenyl acrylate (trade name: Sumilizer GM) and 2,4-di-t-amyl-6-[1-(3,5-di-t-amyl-2-hydroxyphenyl)ethyl]phenyl acrylate (trade name: Sumilizer GS).

Examples of the nitroxide compound include, but are not limited to, a nitroxy free radical from a cyclic hydroxyamine, such as a 2,2,6,6-substituted-1-piperidinyloxy radical or a 2,2,5,5-substituted-1-pyrrolidinyloxy radical. The substituent is preferably an alkyl group having 4 or less carbon atoms such as a methyl group or an ethyl group.

Specific examples of the nitroxy free radical compound include, but are not limited to, a 2,2,6,6-tetramethyl-1-piperidinyloxy radical (TEMPO), a 2,2,6,6-tetraethyl-1-piperidinyloxy radical, a 2,2,6,6-tetramethyl-4-oxo-1-piperidinyloxy radical, a 2,2,5,5-tetramethyl-1-pyrrolidinyloxy radical, a 1,1,3,3-tetramethyl-2-isoindolinyloxyradical, n N,N-di-t-butylamineoxy radical, and the like.

A stable free radical such as galvinoxyl free radical may be used in place of the nitroxy free radical.

The antioxidant may be used in combination with a photostabilizer and it is particularly preferred to use in combination with the photostabilizer since the effect is further exerted and, particularly, heat resistance may be improved. It is also possible to use CHINUBIN C353 and CHINUBIN B75 (all of which are manufactured by CIBA-Geigy Japan Ltd.) obtained by preliminarily mixing the antioxidant with the photostabilizer.

The monoacrylate phenol-based antioxidant can improve elongation of a cured article by controlling a curing rate and curability of thermal radical curing. Since physical properties of the cured article can be easily controlled, the same antioxidants as those described above can be exemplified. These monoacrylate phenol-based antioxidants may be used alone, or two or more kinds of them may be used in combination.

There is no limitation of the used amount of various antioxidants including the monoacrylate phenol-based antioxidant. The amount is preferably 0.01 part or more, more preferably 0.05 part or more, and is preferably 5.0 parts or less, more preferably 3,0 parts or less, and still more preferably 2.0 parts or less, base on 100 parts of the component (A), for the purpose of exerting excellent effect on mechanical properties of the resulting cured article.

<Plasticizer>

The curable composition of the present invention may contain a plasticizer. Examples of the plasticizer to be used for the purposes of adjusting physical properties and controlling properties include phthalic acid esters such as dibutyl phthalate, diheptyl phthalate, di(2-ethylhexyl) phthalate, and butylbenzyl phthalate; non-aromatic dibasic acid esters such as dioctyl adipate and dioctyl sebacate; esters of polyalkylene glycol, such as diethylene glycol dibenzoate and triethylene glycol dibenzoate; phosphic acid esters such as tricresyl phosphate and tributyl phosphate; paraffin chlorides; hydrocarbon-based oils such as alkyldiphenyl and partially hydrogenated terphenyl; and the like. These plasticizers can be used alone, or two or more kinds of them can be used in combination. However, it is not necessarily required. These plasticizers can be mixed upon the production of a polymer. The amount of the plasticizer to be used is preferably from 5 to 800 parts based on 100 parts of the component (A) in terms of impartment of elongation, workability, and prevention of bleeding from the cured article.

<Adhesion Improver>

To the curable composition of the present invention, various adhesion improver may be added in order to improve adhesion to various substrates (plastic film, etc.). Examples of the adhesion improver include alkylalkoxysilanes such as methyltrimethoxysilane, dimethyldimethoxysilane, trimethylmethoxysilane, and n-propyltrimethoxysilane; alkoxysilanes having a functional group, for example, an alkylisopropenoxysilane such as dimethyldiisopropenoxysilane, methyltriisopropenoxysilane, and γ-glycidoxypropylmethyldiisopropenoxysilane, γ-glycidoxypropylmethyldimethoxysilane, γ-glycidoxypropyltrimethoxysilane, vinyltrimethoxysilane, vinyldimethylmethoxysilane, γ-aminopropyltrimethoxysilane, N-(β-aminoethyl)-γ-aminopropyltrimethoxysilane, N-(β-aminoethyl)-γ-aminopropylmethyldimethoxysilane, γ-mercaptopropyltrimethoxysilane, and γ-mercaptopropylmethyldimethoxysilane; silicone varnishs; polysiloxanes; and the like. The amount of the adhesion improver to be used is preferably from 0.1 to 20 parts based on 100 parts of the component (A) in terms of balance between mechanical properties (elongation and strength) and adhesion of the cured article.

<Preparation of Curable Composition>

The curable composition of the present invention can be prepared as a one-pack type composition in which all components are preliminarily mixed and sealed, or prepared as a two-pack type composition in which a solution A excluding only an initiator and a solution B prepared by mixing the initiator with a filler, a plasticizer, a solvent, and the like, are mixed immediately before molding.

<Cured Article>

<Curing Method>

The curable composition of the present invention is cured using photoradical curing in combination with thermal radical curing. Specifically, the cured article of the present invention can be obtained by radical curing of a vinyl-based copolymer (A) through photoinitiation and thermal initiation. In that case, for the purpose of improving curability at a middle temperature range from a normal temperature to about 50°C, a redox-based initiator (D) can be used in combination. When a redox initiator is used, attention must be paid to a storage temperature.

Heating is carried out at the temperature at which thermal curing of the component (A) proceeds. The temperature is preferably a temperature at which the composition can maintain a molten state. That is, the temperature is preferably 50°C or higher, more preferably from 50 to 200°C, and still more preferably from 60 to 180°C.

The curable composition of the present invention can be photocured by irradiation with active energy ray. There is no limitation on an active energy ray source, and examples of the active energy ray source to be used according to properties of the photoradical initiator include irradiation with light and electron beam using a high-pressure mercury lamp, a low-pressure mercury lamp, an electron beam irradiation device, a halogen lamp, a light emitting diode, a semiconductor laser, etc.

<Applications>

There is no limitation on applications of the curable composition of the present invention. However, the curable composition of the present invention can be used in various applications such as materials for electric/electronic parts, such as materials for sealing back faces of solar batteries; electrical insulating materials such as insulating coating materials for wires/cables; coating materials; foams; electric/electronic potting materials; films; gaskets; casting materials; artificial marbles; various molding materials; and water-proofing/rust-proofing sealing materials for wired glass and laminated glass end face (cut portion).

The molded article exhibiting rubber elasticity obtained from the curable composition of the present invention can be widely used in gaskets and packings. In the field of automobile, the molded article can be used, as body parts, air-proofing sealing materials, vibration control materials of glass, vibration-proof materials of the body portion, particularly window seal gaskets and door glass gaskets. The molded article can be used, as chassis parts, vibration-proofing and sound-proofing engine and suspension rubbers, particularly engine mounting rubbers. The molded article can be used, as engine parts, cooling, fuel supply and exhaustion control hoses, and sealing materials for engine oil. It can also be used as parts for exhaust gas purifying apparatuses, and breaking parts.

In the field of household electric appliances, the molded article can be used in packings, O-rings, and belts. Specific examples thereof include decorations for lighting equipments; water-proofing packings; vibration-proofing rubbers; insect-proofing packings; vibration-proofing, sound absorbing and air sealing materials for cleaners; electric drip-proofing covers, water-proofing packings, heater parts packings, electrode parts packings and safety valve diaphragms for water heaters; hoses for sake warmers; water-proofing packings, solenoid valves, water-proofing packings, water

supply tank packings, water suction valves, water receiving packings, connection hoses, belts, heat insulation heater parts packings and steam outlet seals for steam microwave ovens and rice jars; oil packings, O-rings, drain packings, pressure tubes, ventilation tubes, air supply/suction packings, vibration-proofing rubber, oil supply port packings, oil gauge packings, oil feed pipes, diaphragm valves and airpipes for burning appliances; and speakers gaskets, speaker edges, turntable sheets, belts and pulleys for acoustical instruments.

In the field of architecture, the molded article can be used in structural gaskets (zipper gaskets), air film structure roofing materials, water-proofing materials, fixed form sealing materials, vibration-proofing materials, sound-proofing materials, setting block, and sliding materials. In the field of sports, the molded article can be used as sport floors such as all weather type paving materials and gymnasium floor; sole materials and insole materials for sport shoes; and balls for ball game such as golf balls.

In the field of vibration-proofing rubber, the molded article can be used in vibration-proofing rubbers for automobiles, vibration-proofing rubbers for railway vehicles, vibration-proofing rubbers for aircrafts, and fender materials.

In the field of marine/civil engineering, the molded article can be used as structural materials such as rubber expansion joints, bearings, water stops, water-proofing sheets, rubber dams, elastic paving, vibration-proofing pats, and protective bodies; construction submaterials such as rubber flasks, rubber packers, rubber skirts, sponge mats, mortar hoses, and mortar strainer; auxiliary construction materials such as rubber sheets and air hoses; articles for safety measure, such as rubber buoys and wave-eliminating materials; and articles for environmental protection, such as oil fences, silt fences, stain-proofing materials, marine hoses, dredging hoses, and oil skimmer. It is also possible to use as plate rubbers, mats, and foam plates.

<Preferred Curable Composition>

The polymer as the component (A) is an acrylic acid ester-based polymer, and the main chain is produced by living radical polymerization, preferably atom transfer radical polymerization. In terms of improvement of strength of the cured article, impartment of elongation and improvement of workability, the addition of an acrylate monomer is effective. The curable composition contains, as an initiator of the component (A), (B) a photoradical initiator and (C) a thermal radical initiator. Furthermore, (D) a redox-based initiator can be added so as to improve curability at the middle temperature range, as described above.

EXAMPLES

Specific Examples of the present invention will be described together with Comparative Examples, but the present invention is not limited to the following Examples.

In the following Examples, the "number average molecular weight" and the "molecular weight distribution (a ratio of the weight average molecular weight to the number average molecular weight)" were calculated by a standard polystyrene equivalent method using gel permeation chromatography (GPC). A GPC column packed with a polystyrene crosslinked gel (Shodex GPC K-804; manufactured by SHOWA DENKO K.K.) was used and chloroform was used as a GPC solvent. In the following Examples, the "average terminated (meth)acryloyl group number" is the "number of (meth)acryloyl group introduced per molecule of a polymer" and was calculated from the number average molecular weight determined by $^1$H-NMR analysis and GPC. In the following Examples, parts represent parts by weight.

[Production Example 1] (Synthesis of Acryloyl Group Both-Terminated Poly(Butyl Acrylate/Ethyl Acrylate/2-methoxyethyl Acrylate)

Into a 1 L flask, 4.34 g (30.3 mmol) of copper(I) bromide and 74.3 mL of acetonitrile were charged, followed by stirring with heating at 70°C for 20 minutes under a nitrogen flow. To this mixture, 18.1 g (50.3 mmol) of diethyl 2,5-dibromoadipate, 216.6 ml (1.51 mol) of n-butyl acrylate, 301.2 ml (2.78 mol) of ethyl acrylate and 225.4 ml (1.75 mol) of 2-methoxyethyl acrylate were added, followed by stirring with heating at 80°C for 20 minutes. The reaction was initiated by adding 0.21 mL (1.00 mmol) of pentamethyldiethylenetriamine (hereinafter referred to as "triamine"). Furthermore, triamine was appropriately added and the mixture was continuously stirred with heating at 80°C. Polymerization was terminated when a polymerization reaction ratio exceeds 95%. 300 g of the resulting polymer was dissolved in N,N-dimethylacetamide (300 mL) and 7.4 g of potassium acrylate was added, followed by stirring with heating at 70°C for 3 hours under a nitrogen atmosphere to obtain a mixture of acryloyl group-terminated poly(butyl acrylate/ethyl acrylate/2-methoxyethyl acrylate) (1). N,N-dimethylacetamide of the mixed solution was distilled off under reduced pressure and toluene was added to the residue, and then an insoluble matter was removed by filtration. Toluene in the filtrate was removed to purify the polymer (1). The purified polymer (1) had a number average molecular weight of 16,200, a molecular weight distribution of 1.12, and an average terminated acryloyl group number of 1.9.

(Example 1)

To 100 parts of the polymer (1) obtained in Production Example 1, 0.5 part of DAROCURE 1173 (2-hydroxy-2-methyl-1-phenyl-1-propan-1-one, manufactured by Ciba Speciality Chemicals Inc.) and 0.25 part of IRGACURE 819 (bis(2,4,6-trimethylbenzoyl)-phenylphosphine oxide, manufactured by Ciba Speciality Chemicals Inc.) as photoradical initiators, 0.5 part of Niper BW (benzoyl peroxide: 75% by weight, manufactured by NOF CORPORATION) as a thermal radical initiator, and 1 part of IRGANOX 1010 (pentaerythritoltetrakis[3-(3,5-di-t-butyl-4-hydroxyphenyl)propionate], antioxidant, manufactured by Ciba Speciality Chemicals Inc.) were added, followed by sufficiently mixing to obtain a curable composition. Next, the resulting curable composition was irradiated under the following irradiation conditions for 3 seconds using the following UV irradiation apparatus. Then, using the following compression molding machine, the curable composition was pressed under a compression pressure of 5 MPa at 120°C for 10 minutes to obtain a sheet-like cured article having a thickness of about 2 mm.

<UV Irradiation Apparatus>

Model: Eyelandage ECS-301 (manufactured by EYE GRAPHICS CO., LTD.)
Light source: Metal halide lamp
Irradiation conditions:

Intensity: 80 W/cm, Irradiation distance: 15 cm

<Compression Molding Machine>

Model: AYSR-10 (manufactured by SHINTO METAL INDUSTRIES, Corporation)

(Example 2)

The same curable composition as in Example 1 was pressed under a compression pressure of 5 MPa at 120°C for 10 minutes using a compression molding machine and then UV irradiated under the same conditions as in Example 1 for 3 seconds to obtain a sheet-like cured article having a thickness of about 2 mm.

(Comparative Example 1)

In the same manner as in Example 1, except that the photoradical initiators DAROCURE 1173 and IRGACURE 819 were not added and curing was conducted under a compression pressure of 5 MPa at 120°C for 10 minutes, a sheet-like cured article having a thickness of about 2 mm was obtained.

(Comparative Example 2)

In the same manner as in Example 1, except that the thermal radical initiator Niper BW was not added and UV irradiation was conducted for 3 seconds in the curing conditions, a sheet-like cured article having a thickness of about 2 mm was obtained.

Mechanical properties, surface tack, hardness and gel fraction of the sheet-like cured articles obtained in Examples and Comparative Examples were measured by the following procedures. The results are shown in Table 1.

(1) Mechanical Properties

Using the obtained sheet-like cured article, a dumbbell No. 1/3 was made. Using the dumbbell, mechanical properties were measured under the conditions of a tensile speed of 200 mm/min and 23°C × 55%RH in accordance with JIS K 6251 (measuring device: autograph manufactured by Shimadzu Corporation). In Table 1, M50 denotes a modulus at 50% elongation, Tb denotes a strength at breakage, and Eb denotes an elongation at breakage.

(2) Surface Tack

Bowl tack

Bowl tack was measured in accordance with JIS Z 0237 (as the value increases, surface tack becomes worse).

Measuring equipment: MODEL 260 (manufactured by YOSHIMITSU)
Measuring conditions: 23°C × 55%RH
Measuring procedure: A test piece having a length of 100 mm or more is attached to a measuring glass tiltboard so as to adjust a runaway to 100 mm or more. After tilting the tiltboard at an angle of 30°, a ball (balls made of two kinds of high carbon chromium bearing steels, defined in JIS B 1501) is rolled along a tilted surface from a top of the tiltboard. The size of the ball, whose static time on the test piece is 10 seconds or more, was used as an indicator.

Contact Tack

Tack was evaluated by slightly push a surface of a cured article. Evaluation criteria are as follows.

⊙: absolutely no tack
Δ: cured, but slight tack remaining on cured article

(3) Hardness

Hardness was measured under the conditions of 23°C x 55%RH in accordance with JIS K 6253 (measuring equipment: CL-150 (CONSTANT DOADER DUROMETER) manufactured by ASKER and DUROMETERA manufactured by Shimadzu Corporation).

(4) Gel Fraction

A sheet-like cured article was immersed in toluene for 24 hours and the removed sheet-like cured article was dried at 80°C for 3 hours, and then a change in weight before and after the test was calculated by the following equation.

$$\text{Gel fraction (\%)} = [(\text{Weight of test piece after immersing in toluene and drying})/(\text{Weight of test piece before test})] \times 100$$

As the value of a gel fraction approaches 100, the curing degree enhances.

(5) Depth Curability

A curable composition was poured into a mold for making a compression set test sample, as described in JIS K 6262, and then cured under the respective conditions of Examples and Comparative Examples. Next, the depth of the cured portion was measured (12 mm in the case of complete curing).

Table 1

| | | Example 1 | Example 2 | Comparative Example 1 | Comparative Example 2 |
|---|---|---|---|---|---|
| Mechanical properties | M50 (Mpa) | 0.33 | 0.20 | 0.15 | 0.30 |
| | Tb (Mpa) | 0.64 | 0.59 | 0.44 | 0.47 |
| | Eb (%) | 101 | 162 | 158 | 82 |
| Tack | Bowl tack | 3/32 | 4/32 | 10/32 | 12/32 |
| | Contact tack | ⊙ | ⊙ | Δ | Δ |

(continued)

| | Example 1 | Example 2 | Comparative Example 1 | Comparative Example 2 |
|---|---|---|---|---|
| Hardness (Duro A) | 20 | 20 | 10 | 14 |
| Gel fraction (%) | 98 | 97 | 95 | 97 |
| Deep curability (mm) | 12 | 12 | 12 | 6.5 |

As is apparent from the results shown in Table 1, since the cured articles of Examples 1 and 2 show high Tb (strength at breakage), and improved surface tack, hardness and gel fraction as compared with those of Comparative Examples 1 and 2, an improvement in curability is recognized in the curable composition for both photoradical curing and thermal radical curing.

INDUSTRIAL APPLICABILITY

The curable composition for both photoradical curing and thermal radical curing of the present invention is capable of forming a cured article which is excellent in curability, and is also excellent in heat resistance, weatherability and oil resistance.

## Claims

1. A cured article obtained by both thermal curing and photocuring a curable composition comprising as essential components:

   (A) a vinyl-based polymer having a molecular weight distribution of less than 1.8 and having two or more groups represented by the general formula (1):

   $$-OC(O)C(R^a)=CH_2 \qquad (1)$$

   in which $R^a$ represents a hydrogen atom or an organic group having 1 to 20 carbon atoms, per molecule, and having one or more groups represented by the above general formula (1) at a molecular terminal;

   (B) a photoradical initiator; and
   (C) a thermal radical initiator,
   wherein the amount of component (B) is 0.001 to 10 parts and the amount of (C) is 0.01 to 3 parts, each based on 100 parts by weight of the component (A).

2. The cured article according to claim 1, wherein the component (A) is a (meth)acrylic polymer.

3. The cured article according to claim 1 or 2, wherein the component (B) is an acylphosphine oxide and/or a phenylketone-based compound.

4. The cured article according to claim 1 or 2, wherein the component (B) is acetophenone, propiophenone, benzophenone, xanthol, fluorene, benzaldehyde, anthraquinone, triphenylamine, carbazole, 3-methylacetophenone, 4-methylacetophenone, 3-pentylacetophenone, 2,2-diethoxyacetophenone, 4-methoxyacetophenone, 3-bromoacetophenone, 4-allylacetophenone, p-diacetylbenzene, 3-methoxybenzophenone, 4-methylbenzophenone, 4-chlorobenzophenone, 4,4'-dimethoxybenzophenone, 4-chloro-4'-benzylbenzophenone, 3-chloroxanthone, 3,9-dichloroxanthone, 3-chloro-8-nonylxanthone, benzoil, benzoin methyl ether, benzoin butyl ether, bis(4-dimethylaminophenyl) ketone, benzyl methoxy ketal, 2-chlorothioxanthone, 2,2-dimethoxy-1,2-diphenylethane-1-one, 1-hydroxy-cyclohexyl-phenyl-ketone, 2-hydroxy-2-methyl-1-phenyl-propane-1-one, 2-methyl-1-[4-(methylthio)phenyl]-2-morpholinopropane-1-one, or 2-benzyl-2-dimethylamino-1-(4-morpholinophenyl)-butanone-1.

5. The cured article according to claim 1 or 2, wherein the component (B) is 2,4,6-trimethylbenzoyl-diphenyl-phosphine oxide, bis(2,4,6-trimethylbenzoyl)-phenylphosphine oxide, bis(2,6-dimethoxybenzoyl)-2,4,4-trimethyl-pentylphosphine oxide, bis(2,6-dimethylbenzoyl)-phenylphosphine oxide, bis(2,4,6-trimethylbenzoyl)-isobutylphosphine oxide,

bis(2,6-dimethoxybenzoyl)-isobutylphosphine oxide, bis(2,6-dimethoxybenzoyl)-phenylphosphine oxide, 1-hydroxy-cyclohexyl-phenyl-ketone, 2-hydroxy-2-methyl-1-phenyl-propan-1-one, or 2,2-dimethoxy-1,2-diphenylethan-1-one.

**6.** The cured article according to any one of claims 1 to 5, wherein the component (C) is an azo-based initiator, a peroxide initiator, or a persulfate initiator.

**7.** The cured article according to claim 6, wherein the component (C) is 2,2'-azobis(4-methoxy-2,4-dimethylvaleronitrile), 2,2'-azobis(2-amidinopropane) dihydrochloride, 2,2'-azobis(2,4-dimethylvaleronitrile), 2,2'-azobis(isobutyronitrile), 2,2'-azobis-2-methylbutyronitrile, 1,1-azobis(1-cyclohexanecarbonitrile), 2,2'-azobis(2-cyclopropylpropionitrile), or 2,2'-azobis(methylisobutyrate).

**8.** The cured article according to claim 6, wherein the component (C) is benzoyl peroxide, acetyl peroxide, lauroyl peroxide, decanoyl peroxide, dicetyl peroxydicarbonate, di(4-t-butylcyclohexyl)peroxy dicarbonate, di(2-ethylhexyl)peroxy dicarbonate, t-butylperoxy pivalate, t-butylperoxy-2-ethylhexanoate, or dicumyl peroxide.

**9.** The cured article according to claim 6, wherein the component (C) is potassium persulfate, sodium persulfate, or ammonium persulfate.

**10.** A cured article according to any one of claims 1 to 9, wherein said thermal curing is carried out at 50 to 200°C.

**11.** A cured article according to any one of claims 1 to 9, wherein said photocuring is carried out by irradiation with active energy ray.

**12.** A cured article according to any one of claims 1 to 11, wherein the curable composition further contains (D) a redox-based initiator.

**Patentansprüche**

**1.** Ausgehärteter Gegenstand, der sowohl durch thermisches Aushärten als auch durch Photoaushärten einer härtbaren Zusammensetzung erhalten ist, die als wesentliche Komponenten umfasst:

(A) ein Vinyl-basiertes Polymer, das eine Molekulargewichtsverteilung von weniger als 1,8 aufweist und zwei oder mehr durch die allgemeine Formel (1) dargestellte Gruppen aufweist:

$$-OC(O)C(R^a)=CH_2 \qquad (1)$$

wobei $R^a$ ein Wasserstoffatom oder eine anorganische Gruppe mit 1 bis 20 Kohlenstoffatomen pro Molekül darstellt und eine oder mehrere durch die oben gezeigte allgemeine Formel (1) dargestellte Gruppe/n an einem molekularen Ende aufweist,

(B) einen photoradikalen Initiator und
(C) einen thermisch radikalen Initiator,
wobei der Gehalt der Komponente (B) zwischen 0,001 und 10 Anteilen und der Gehalt von (C) zwischen 0,01 und 3 Anteilen bezogen auf 100 Gewichtsanteile der Komponente (A) beträgt.

**2.** Ausgehärteter Gegenstand nach Anspruch 1, wobei die Komponente (A) ein (Meth)acrylpolymer ist.

**3.** Ausgehärteter Gegenstand nach Anspruch 1 oder 2, wobei die Komponente (B) ein Acylphosphinoxid und/oder eine Phenylketon-basierte Verbindung ist.

**4.** Ausgehärteter Gegenstand nach Anspruch 1 oder 2, wobei die Komponente (B) Acetophenon, Propiophenon, Benzophenon, Xanthol, Fluoren, Benzaldehyd, Anthrachinon, Triphenylamin, Carbazol, 3-Methylacetophenon, 4-Methylacetophenon, 3-Pentylacetophenon, 2,2-Diethoxyacetophenon, 4-Methoxyacetophenon, 3-Bromacetophenon, 4-Allylacetophenon, p-Diacetylbenzen, 3-Methoxybenzophenon, 4-Methylbenzophenon, 4-Chlorbenzophenon, 4,4'-Dimethoxybenzophenon, 4-Chlor-4'-benzylbenzophenon, 3-Chlorxanthon, 3,9-Dichlorxanthon, 3-Chlor-8-nonylxanthon, Benzoil, Benzoe, Methylether, Benzoebutylether, Bis(4-dimethylaminophenyl)keton, Benzylmethoxyketal, 2-Chlorthioxanthon, 2,2-Dimethoxy-1,2-diphenylethan-1-on, 1-Hydroxycyclohexylphenylketon, 2-Hydroxy-2-methyl-1-phenylpropan-1-on, 2-Methyl-1-[4-(methylthio)phenyl]-2-morpholinpropan-1-on oder 2-Benzyl-2-dimethylamino-1-(4-morpholinphenyl)-butanon-1 ist.

**5.** Ausgehärteter Gegenstand nach Anspruch 1 oder 2, wobei die Komponente (B) 2,4,6-Trimethylbenzoyldiphenylphosphinoxid, Bis(2,4,6-trimethylbenzoyl)-phenylphosphinoxid, Bis(2,6-dimethoxybenzoyl)-2,4,4-trimethylpentylphosphinoxid, Bis(2,6-dimethylbenzoyl)-phenylphosphinoxid, Bis(2,4,6-trimethylbenzoyl)-isobutylphosphinoxid, Bis(2,6-dimethoxybenzoyl)-isobutylphosphinoxid, Bis(2,6-dimethoxybenzoyl)-phenylphosphinoxid, 1-Hydroxycyclohexylphenylketon, 2-Hydroxy-2-methyl-1-phenylpropan-1-on oder 2,2-Dimethoxy-1,2-diphenylethan-1-on ist.

**6.** Ausgehärteter Gegenstand nach einem der Ansprüche 1 bis 5, wobei die Komponente (C) ein azobasierter Initiator, ein Peroxidinitiator oder ein Persulfatinitiator ist.

**7.** Ausgehärteter Gegenstand nach Anspruch 6, wobei die Komponente (C) 2,2'-Azobis-(4-methoxy-2,4-dimethylvaleronitril), 2,2'-Azobis-(2-Amidinopropan)-dihydrochlorid, 2,2'-Azobis-(2,4-dimethylvaleronitril), 2,2'-Azobis-(isobutyronitril), 2,2'-Azobis-2-methylbutyronitril, 1,1-Azobis-(1-cyclohexancarbonitril), 2,2'-Azobis-(2-cyclopropylpropionitril) oder 2,2'-Azobis-(methylisobutyrat) ist.

**8.** Ausgehärteter Gegenstand nach Anspruch 6, wobei die Komponente (C) Benzoylperoxid, Acetylperoxid, Lauroylperoxid, Decanoylperoxid, Dicetylperoxydicarbonat, Di(4-t-butylcyclohexyl)peroxydicarbonat, Di(2-ethylhexyl)peroxydicarbonat, t-Butylperoxypivalat, t-Butylperoxy-2-ethylhexanoat oder Dicumylperoxid ist.

**9.** Ausgehärteter Gegenstand nach Anspruch 6, wobei die Komponente (C) Kaliumpersulfat, Natriumpersulfat oder Ammoniumpersulfat ist.

**10.** Ausgehärteter Gegenstand nach einem der Ansprüche 1 bis 9, wobei das thermische Aushärten bei 50 bis 200 °C ausgeführt wird.

**11.** Ausgehärteter Gegenstand nach einem der Ansprüche 1 bis 9, wobei das Photoaushärten durch Bestrahlung mit aktiven Energiestrahlen ausgeführt wird.

**12.** Ausgehärteter Gegenstand nach einem der Ansprüche 1 bis 11, wobei die härtbare Zusammensetzung ferner einen (D) redoxbasierten Initiator enthält.

## Revendications

**1.** Article durci obtenu par durcissement thermique et photodurcissement d'une composition durcissable comprenant comme composants essentiels :

(A) un polymère à base de vinyle ayant une distribution de la masse moléculaire inférieure à 1,8 et ayant deux ou plusieurs groupes représentés par la formule générale (1) :

$$-OC(O)C(R^a)=CH_2 \qquad (1)$$

où $R^a$ représente un atome d'hydrogène ou un groupe organique ayant 1 à 20 atomes de carbone, par molécule, et ayant un ou plusieurs groupes représentés par la formule générale (1) ci-dessus à une extrémité moléculaire ;

(B) un initiateur photoradicalaire ; et
(C) un initiateur radicalaire thermique,
où la quantité de composant (B) est 0,001 à 10 parties et la quantité de (C) est 0,01 à 3 parties, à chaque fois basée sur 100 parties en poids du composant (A).

**2.** Article durci selon la revendication 1, où le composant (A) est un polymère (méth)acrylique.

**3.** Article durci selon la revendication 1 ou 2, où le composant (B) est un oxyde d'acylphosphine et/ou un composé à base de phényl-cétone.

**4.** Article durci selon la revendication 1 ou 2, où le composant (B) est l'acétophénone, la propiophénone, la benzophénone, le xanthol, le fluorène, le benzaldéhyde, l'anthraquinone, la triphénylamine, le carbazole, la 3-méthylacétophénone, la 4-méthylacétophénone, la 3-pentylacétophénone, la 2,2-diéthoxyacétophénone, la 4-méthoxyacétophénone, la 3-bromoacétophénone, la 4-allylacétophénone, le p-diacétyl-benzène, la 3-méthoxybenzophénone, la 4-méthylbenzophénone, la 4-chlorobenzophénone, la 4,4'-diméthoxybenzophénone, la 4-chloro-4'-benzylbenzophénone, la 3-chloroxanthone, la 3,9-dichloroxanthone, la 3-chloro-8-nonylxanthone, le benzol, le méthyléther de benzoïne, le butyléther de benzoïne, la bis(4-diméthylaminophényl)cétone, le benzyl-méthoxycétal, la 2-chlorothioxanthone, la 2,2-diméthoxy-1,2-diphényl-éthan-1-one, la 1-hydroxy-cyclohexyl-phényl-cétone, la 2-hydroxy-2-méthyl-1-phényl-propan-1-one, la 2-méthyl-1-[4-(méthylthio)phényl]-2-morpholinopropan-1-one ou la 2-benzyl-2-diméthylamino-1-(4-morpho-linophényl)-butanone-1.

**5.** Article durci selon la revendication 1 ou 2, où le composant (B) est l'oxyde de 2,4,6-triméthylbenzoyl-diphénylphosphine, l'oxyde de bis(2,4,6-triméthylbenzoyl)-phénylphosphine, l'oxyde de bis(2,6-diméthoxybenzoyl)-2,4,4-triméthyl-pentylphosphine, l'oxyde de bis(2,6-diméthylbenzoyl)-phénylphosphine, l'oxyde de bis(2,4,6-triméthylbenzoyl)-isobutylphosphine, l'oxyde de bis(2,6-diméthoxybenzoyl)-isobutylphosphine, l'oxyde de bis(2,6-diméthoxybenzoyl)-phénylphosphine, la 1-hydroxy-cyclohexyl-phényl-cétone, la 2-hydroxy-2-méthyl-1-phényl-propan-1-one ou la 2,2-diméthoxy-1,2-diphényléthan-1-one.

**6.** Article durci selon l'une quelconque des revendications 1 à 5, où le composant (C) est un initiateur à base azoïque, un initiateur peroxyde ou un initiateur persulfate.

**7.** Article durci selon la revendication 6, où le composant (C) est le 2,2'-azobis(4-méthoxy-2,4-diméthylvaléronitrile), le dichlorhydrate de 2,2'-azobis(2-aminodinopropane), le 2,2'-azobis(2,4-diméthylvaléronitrile), le 2,2'-azobis(isobutyronitrile), le 2,2'-azobis-2-méthylbutyronitrile, le 1,1-azobis(l-cyclohexanecarbonitrile), le 2,2'-azobis(2-cyclopropylpropionitrile) ou le 2,2'-azobis(isobutyrate de méthyle).

**8.** Article durci selon la revendication 6, où le composant (C) est le peroxyde de benzoyle, le peroxyde d'acétyle, le peroxyde de lauroyle, le peroxyde de décanoyle, le peroxydicarbonate de dicétyle, le peroxydicarbonate de di(4-t-butylcyclohexyle), le peroxydicarbonate de di(2-éthylhexyle), le peroxypivalate de t-butyle, le peroxy-2-éthylhexanoate de t-butyle ou le peroxyde de dicumyle.

**9.** Article durci selon la revendication 6, où le composant (C) est le persulfate de potassium, le persulfate de sodium ou le persulfate d'ammonium.

**10.** Article durci selon l'une quelconque des revendications 1 à 9, où ledit durcissement thermique est conduit à 50 à 200°C.

**11.** Article durci selon l'une quelconque des revendications 1 à 9, où ledit photodurcissement est conduit par irradiation avec un rayonnement d'énergie actif.

**12.** Article durci selon l'une quelconque des revendications 1 à 11, où la composition durcissable contient en outre (D) un initiateur à base redox.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2000154370 A
- JP 2000072816 A
- JP 2000095826 A
- JP 10053634 A
- JP 10195121 A
- JP 2004123775 A
- WO 9630421 A
- WO 9718247 A
- JP HEI4132706 B
- JP SHO61271306 B
- JP 2594402 B
- JP SHO5447782 B
- JP HEI04132706 B


### Non-patent literature cited in the description


- *J. Am. Chem. Soc.,* 1994, vol. 116, 7943
- *Macromolecules,* 1994, vol. 27, 7228
- **MATYJASZEWSKI et al.** *J. Am. Chem. Soc.,* 1995, vol. 117, 5614
- *Macromolecules,* 1995, vol. 28, 7901
- *Science,* 1996, vol. 272, 866
- **SAWAMOTO et al.** *Macromolecules,* 1995, vol. 28, 1721
- *Macromolecules,* 1995, vol. 28, 2993
- Antioxidant Handbook. TAISEISHA LTD,
- Deterioration and Stabilization of Polymer Materials. CMC Publishing Co., Ltd, 235-242